# EUROPEAN PATENT APPLICATION

(11) **EP 4 801 074 A1**
(43) Date of publication of application: **02.09.2026**
(21) Application number: 24890166.2
(22) Date of filing: 19.07.2024
(51) Int. Cl.: H04W 4/24

(54) **COMMUNICATION METHOD, AND APPARATUS**

(30) Priority: 17.11.2023 CN 202311547013
(71) Applicant: Huawei Technologies Co., Ltd., Shenzhen, Guangdong 518129 (CN)
(72) Inventor: CHEN, Shan, Shenzhen, Guangdong 518129 (CN)
(74) Representative: Pfenning, Meinig & Partner mbB
(86) International application number: PCT/CN2024/106564
(87) International publication number: WO 2025/102800

(57) **Abstract**

Embodiments of this application relate to the field of communication technologies, and provide a communication method and apparatus, to implement accurate charging before and after slice replacement in a slice replacement or slice recovery scenario, thereby improving charging accuracy. The method includes: A first apparatus determines that a slice corresponding to a first data connection session is updated from a first slice to a second slice; and sends a first charging message to a second apparatus. The first charging message includes an identifier of the first slice, an identifier of the second slice, and a related charging parameter, and the first charging message is used to perform associated charging for usage of the first slice and/or the second slice.

## Description

This application claims priority to Chinese Patent Application No. 202311547013.6, filed with the China National Intellectual Property Administration on November 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A network slice is a new network architecture. A plurality of logical networks are provided on a same shared network infrastructure, and each logical network (namely, a network slice) may serve a specific service type or industry user. Application scenarios of network handover include a slice replacement scenario and a slice recovery scenario. Slice replacement means that when a network detects that a current serving network slice is unavailable or congested, the original slice may be updated to an alternative slice. Correspondingly, after the slice replacement, when the network detects that the network slice before the replacement is available or the congestion is relieved, the network may recover the alternative slice to the original slice. This process is referred to as slice recovery.

Currently, network slice charging performed by the network includes slice charging performed based on a counted quantity of times (including a single time) that a user accesses slices, slice usage charging performed based on counted used usage of slices by the user, and/or the like. However, in the slice replacement scenario and the slice recovery scenario, a billing system cannot sense a slice change, and cannot determine an association relationship between charging information before and after the network slice is updated. Consequently, charging may be inaccurate.

### SUMMARY

This application is used to implement accurate charging before and after slice replacement in a slice replacement or slice recovery scenario, thereby improving charging accuracy.

To achieve the foregoing objective, this application uses the following technical solutions.

According to a first aspect, a communication method is provided. The method may be performed by a first apparatus, or may be performed by a module (for example, a chip or a circuit) of the first apparatus. For example, the first apparatus may be a session management function. The method includes: determining that a slice corresponding to a first data connection session is updated from a first slice to a second slice; and sending a first charging message to a second apparatus, where the first charging message includes an identifier of the first slice, an identifier of the second slice, and a related charging parameter, and the first charging message is used to perform associated charging based on usage of the first slice and/or the second slice by a user.

In the foregoing implementation, in a slice replacement or slice recovery scenario, a reported charging message carries identifiers of slices before and after update (for example, the identifier of the first slice and the identifier of the second slice), so that a billing system can sense a slice change, and perform associated charging for usage of the slices by the user before and after the update, thereby improving charging accuracy.

In an implementation, the sending the first charging message to the second apparatus includes: determining, based on the slice corresponding to the first data connection session being updated from the first slice to the second slice, that a trigger event corresponding to slice replacement is met, and sending the first charging message to the second apparatus; or determining, based on the slice corresponding to the first data connection session being updated from the first slice to the second slice, that a trigger event corresponding to slice recovery is met, and sending the first charging message to the second apparatus.

In the foregoing implementation, a specific trigger event is used to trigger a corresponding chargeable event based on occurrence of slice replacement or slice recovery. In this way, in the slice replacement or slice recovery scenario, associated charging is performed based on the usage of the slices by the user before and after the update, to improve the charging accuracy and flexibility of the associated charging.

In an implementation, the sending the first charging message to the second apparatus includes: determining, based on the slice corresponding to the first data connection session being updated from the first slice to the second slice, that a trigger event corresponding to release of the first data connection session is met, and sending the first charging message to the second apparatus.

In the foregoing implementation, a specific trigger event may be used to trigger a corresponding chargeable event based on the release of the data connection session when slice replacement or slice recovery occurs. In this way, in the slice replacement or slice recovery scenario, associated charging is performed based on the usage of the slices by the user before and after the update, to improve the charging accuracy and flexibility of the associated charging.

In an implementation, the method further includes: determining, based on the slice corresponding to the first data connection session being updated from the first slice to the second slice, that a trigger event corresponding to establishment of a second data connection session is met, and sending a second charging message to the second apparatus, where the second charging message includes the identifier of the first slice, the identifier of the second slice, and a related charging parameter, and is used to perform associated charging based on usage of the first slice and/or the second slice by the user.

In the foregoing implementation, a specific trigger event may be used to trigger a corresponding chargeable event based on the establishment of the data connection session when the slice replacement or the slice recovery occurs. In this way, in the slice replacement or slice recovery scenario, the associated charging is performed based on the usage of the slices by the user before and after the update, to improve the charging accuracy and the flexibility of the associated charging.

In an implementation, the first charging message includes quota usage information corresponding to the first slice and/or quota request information corresponding to the second slice.

In the foregoing implementation, requested associated charging in the slice replacement or slice recovery scenario may carry information related to a slice quota, so that a slice update does not affect quota management for usage of slices, to improve the charging accuracy.

In an implementation, before the sending the first charging message to the second apparatus, the method further includes: closing a first counter corresponding to counted used usage of the first slice, and opening a second counter corresponding to counted used usage of the second slice; and the sending the first charging message to the second apparatus includes: sending the first charging message to the second apparatus when a next chargeable event occurs, where the first charging message includes counted information of the first counter and/or counted information of the second counter.

In the foregoing implementation, an associated charging request triggered in the slice replacement or slice recovery scenario may be triggered instantly or may be triggered in a deferred manner. For example, a counter corresponding to an old slice is closed, a counter corresponding to a new slice is opened, and charging information is reported in a combined manner when a next chargeable event occurs, to implement flexible and accurate charging management.

Optionally, an instant trigger or deferred trigger mode may be configured in the first apparatus, or may be changed by the second apparatus as needed. When the slice replacement and/or the slice recovery occur/occurs, enabling of the specific chargeable event may also be configured in the first apparatus, or may be enabled or disabled by the second apparatus as needed.

In an implementation, the method further includes: sending a third charging message to a session management function SMF corresponding to a home operator, to indicate that a visited slice corresponding to the first data connection session is updated from the first slice to the second slice, where the third charging message includes the identifier of the first slice, the identifier of the second slice, and a related charging parameter.

In the foregoing implementation, when slice replacement or slice recovery occurs in a roaming scenario, the charging message may be sent to the session management function corresponding to the home operator, so that a billing system of the home operator can associate slice charging corresponding to the first data connection session with the first slice and the second slice, to implement the associated charging before and after the slice update, thereby improving charging accuracy in the roaming scenario.

In an implementation, the sending the first charging message to the second apparatus includes: if the first apparatus is a session management function SMF of a visited operator, sending the first charging message to a charging function of the visited operator; or if the first apparatus is the session management function SMF of the home operator, sending the first charging message to a charging function corresponding to the home operator, to support updating of the slice corresponding to the first data connection session from the first slice to the second slice, where the first charging message includes the identifier of the first slice, the identifier of the second slice, and/or an identifier of a third slice, and the third slice is a network slice of the home operator.

In the foregoing implementation, when slice replacement or slice recovery occurs in different roaming scenarios, the session management function of the visited operator may send, to the charging function of the visited operator, the charging request, which may be used by a billing system of the visited operator to associate the slice charging corresponding to the first data connection session with the first slice and the second slice, to implement the associated charging before and after the slice update, so as to improve accuracy and flexibility of charging in the roaming scenarios.

In an implementation, if the first apparatus is the SMF of the visited operator, the method further includes: sending a fourth charging message to the charging function corresponding to the home operator, where the fourth charging message includes the identifier of the first slice, the identifier of the second slice, the identifier of the third slice, and a related charging parameter, is used to perform associated charging based on the usage of the first slice and/or the second slice by the user, and is used for mapping between the first and second slices and the third slice.

In the foregoing implementation, when slice replacement or slice recovery occurs in different roaming scenarios, the session management function of the visited operator may send, to the charging function of the home operator, the charging request, which may be used by a billing system of the home operator to associate the slice charging corresponding to the first data connection session with the first slice and the second slice, to implement the associated charging before and after the slice update, so as to improve accuracy and flexibility of charging in the roaming scenarios.

In an implementation, the first charging message or the fourth charging message further includes an identifier of a fourth slice, indicating that a home slice corresponding to the first data connection session is updated from the third slice to the fourth slice. The first charging message or the fourth charging message is used to perform associated charging for usage of the third slice and/or the fourth slice, and further includes a mapping relationship between the first and second slices and the third and fourth slices.

In the foregoing implementation, when the slice replacement or the slice recovery occurs in the roaming scenario, visited slice replacement/recovery and home slice replacement/recovery may both occur. In this case, the charging message may further include the identifiers of the third slice and the fourth slice, and is used by the billing system to perform the associated charging for usage of the third slice and/or the fourth slice, to improve the accuracy and flexibility of the charging in the roaming scenario.

In an implementation, the identifier of the first slice and the identifier of the second slice are carried in at least one of the following information: protocol data unit PDU session charging information; or a network slice identifier, an alternative network slice identifier, a used unit container UUC field, or network slice mapping information in the PDU session charging information.

In the foregoing implementation, the identifier of the alternative slice or the identifier of the original slice corresponding to the slice recovery is added to the charging message, so that identification information can be carried in the foregoing possible information, to improve information indication flexibility. Information does not need to be separately sent, thereby reducing signaling overheads.

In an implementation, the first charging message includes first indication information, indicating that slice replacement or slice recovery occurs for the first data connection session.

In the foregoing implementation, the indication information indicating that the slice replacement or the slice recovery occurs may be added to the charging message, so that the billing system can obtain, based on the indication, information before and after the slice update, and perform the associated charging, to improve information indication flexibility and charging efficiency.

In an implementation, a slice identifier includes single network slice selection assistance information S-NSSAI and/or an identifier of a network slice instance NSI.

In the foregoing implementation, identifiers indicating slice information may be used to distinguish between network slice replacement or slice instance replacement in a scenario. A similar associated charging procedure may be performed for the network slice replacement or the slice instance replacement, to improve the accuracy and flexibility of the charging.

According to a second aspect, a communication method is provided. The method may be performed by a second apparatus, or may be performed by a module (for example, a chip or a circuit) of the second apparatus. For example, the second apparatus may be a charging function. The method includes: receiving a first charging message from a first apparatus, where the first charging message includes an identifier of a first slice, an identifier of a second slice, and a related charging parameter, and is used to perform associated charging for usage of the first slice and/or the second slice that correspond/corresponds to a first data connection session; and managing, based on the first charging message, a charging data record CDR corresponding to the first data connection session, where the CDR includes charging information corresponding to the first slice and/or charging information corresponding to the second slice.

In an implementation, the first charging message includes quota usage information corresponding to the first slice and/or quota request information corresponding to the second slice.

In an implementation, quota management corresponding to the first slice is identified by using the first slice, and quota management corresponding to the second slice is identified by using the first slice.

In an implementation, the operating the CDR includes: updating a first CDR corresponding to the first data connection session, where the first CDR includes the charging information corresponding to the first slice and/or the charging information corresponding to the second slice.

In an implementation, the operating the CDR includes: closing a first CDR corresponding to the first data connection session, where the first CDR includes the charging information corresponding to the first slice; and creating a second CDR corresponding to a second data connection session, where the second CDR includes the charging information corresponding to the second slice.

In an implementation, the first apparatus is a session management function SMF that is of a visited operator of a user and that corresponds to the first data connection session.

In an implementation, the receiving the first charging message from the first apparatus includes: if the second apparatus is a charging function of a home operator, receiving the first charging message from a session management function SMF corresponding to the home operator; or if the second apparatus is a charging function of the visited operator, receiving the first charging message from the session management function SMF corresponding to the visited operator, where the first charging message includes the identifier of the first slice, the identifier of the second slice, and an identifier of a third slice, and is used to perform associated charging for usage of the first slice and/or the second slice, and the third slice is a network slice of a home operator.

In an implementation, if the second apparatus is the charging function of the home operator, the method further includes: receiving a fourth charging message from the session management function SMF corresponding to the visited operator, where the fourth charging message includes the identifier of the first slice, the identifier of the second slice, the identifier of the third slice, and a related charging parameter, and is used to perform associated charging for usage of the first slice and/or the second slice.

In an implementation, the first charging message further includes an identifier of a fourth slice, indicating that a home slice corresponding to the first data connection session is updated from the third slice to the fourth slice, and is used to perform associated charging for usage of the third slice and/or the fourth slice.

In an implementation, the method further includes: sending a fifth charging message to the charging function CHF corresponding to the home operator, where the fifth charging message includes the identifier of the first slice, the identifier of the second slice, and a related charging parameter, and is used to perform associated charging for usage of the first slice and/or the second slice.

In an implementation, the identifier of the first slice and the identifier of the second slice are carried in at least one of the following information: PDU session charging information; or a network slice identifier, an alternative network slice identifier, a used unit container UUC field, or network slice mapping information in the PDU session charging information.

In an implementation, the first charging message includes first indication information, indicating that slice replacement or slice recovery occurs for the first data connection session.

In an implementation, a slice identifier includes single network slice selection assistance information S-NSSAI and/or an identifier of a network slice instance NSI.

In an implementation, the method further includes: sending the CDR corresponding to the first data connection session, to determine, based on subscription information of a first slice tenant for the first slice, the charging information of the first slice and the second slice that correspond to the first data connection session, and/or the correspondingly generated CDR, charging corresponding to the first slice tenant.

In the foregoing implementation, the second apparatus (for example, the CHF) may send the generated CDR to another apparatus (for example, Billing or account management) of a billing system. The billing system may determine charging of a terminal user or a slice tenant based on a CDR corresponding to a data connection session and a slice mapping relationship.

According to a third aspect, a communication method is provided. The method may be performed by a third apparatus, or may be performed by a module (for example, a chip or a circuit) of the third apparatus. For example, the third apparatus may be an access and mobility management function. The method includes: determining that a slice corresponding to a first user is updated from a first slice to a second slice; and sending a sixth charging message to a second apparatus, where the sixth charging message includes an identifier of the first slice, an identifier of the second slice, and a related charging parameter, and is used to perform associated charging for the first slice and/or the second slice.

In an implementation, the sending the sixth charging message to the second apparatus includes: determining, based on the slice corresponding to the first user being updated from the first slice to the second slice, that the first user meets a trigger event corresponding to registration management, and sending the sixth charging message to the second apparatus; or determining, based on the slice corresponding to the first user being updated from the first slice to the second slice, that the first user meets a trigger event corresponding to connection management, and sending the sixth charging message to the second apparatus; or determining, based on the slice corresponding to the first user being updated from the first slice to the second slice, that the first user meets a trigger event corresponding to a location update, and sending the sixth charging message to the second apparatus.

In an implementation, the first apparatus is an access and mobility management function AMF corresponding to a visited operator of the first user, and the second apparatus is configured to provide a charging function CHF for the visited operator.

In an implementation, the method further includes: sending a charging message to a charging function CHF corresponding to a home operator of the first user, where the charging message includes the identifier of the first slice, the identifier of the second slice, and a related charging parameter, and is used to perform associated charging for the first slice and/or the second slice.

In an implementation, a slice identifier includes single network slice selection assistance information S-NSSAI and/or an identifier of a network slice instance NSI.

In an implementation, the sixth charging message includes second indication information, indicating that the slice corresponding to the first user is replaced or recovered.

According to a fourth aspect, a communication apparatus is provided, to implement the foregoing method. The communication apparatus may be the first apparatus in the first aspect, or the second apparatus in the second aspect, or the third apparatus in the third aspect, or a node or device including the first apparatus, the second apparatus, or the third apparatus, or a module in the first apparatus, the second apparatus, or the third apparatus, for example, a chip, a chip system, or a circuit, or a logical node, logical module, or software that can implement a part or all of functions.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus may include a processing module and a transceiver module. The processing module may be configured to implement a processing function in any one of the foregoing aspects and any one of the possible implementations of the foregoing aspects. The processing module may be, for example, a processor. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

With reference to the fourth aspect, in a possible implementation, the transceiver module includes a sending module and a receiving module, which are respectively configured to implement the sending function and the receiving function in any one of the foregoing aspects and the possible implementations of the foregoing aspects.

According to a fifth aspect, a communication apparatus is provided, including a processor. The processor is configured to: after being coupled to a memory and reading instructions in the memory, perform, based on the instructions, the method according to any one of the foregoing aspects. The communication apparatus may be the first apparatus in the first aspect, or the second apparatus in the second aspect, or the third apparatus in the third aspect, or a node or device including the first apparatus, the second apparatus, or the third apparatus, or a module in the first apparatus, the second apparatus, or the third apparatus, for example, a chip, a chip system, or a circuit, or a logical node, logical module, or software that can implement a part or all of functions.

With reference to the fifth aspect, in a possible implementation, the communication apparatus further includes the memory. The memory is configured to store necessary program instructions and data.

With reference to the fifth aspect, in a possible implementation, the communication apparatus is a chip or a chip system. Optionally, when the communication apparatus is the chip system, the communication apparatus may include a chip, or may include the chip and another discrete device.

According to a sixth aspect, a communication apparatus is provided, including a processor and an interface circuit. The interface circuit is configured to: receive a computer program or instructions, and transmit the computer program or the instructions to a processor. The processor is configured to execute the computer program or the instructions, to cause the communication apparatus to perform the method according to any one of the foregoing aspects. The communication apparatus may be the first apparatus in the first aspect, or the second apparatus in the second aspect, or the third apparatus in the third aspect, or a node or device including the first apparatus, the second apparatus, or the third apparatus, or a module in the first apparatus, the second apparatus, or the third apparatus, for example, a chip, a chip system, or a circuit, or a logical node, logical module, or software that can implement a part or all of functions.

With reference to the sixth aspect, in a possible implementation, the communication apparatus is a chip or a chip system. Optionally, when the communication apparatus is the chip system, the communication apparatus may include a chip, or may include the chip and another discrete device.

According to a seventh aspect, a computer-readable storage medium is provided. The computer-readable storage medium stores instructions. When the instructions are run on a computer, the computer is caused to perform the method according to any one of the foregoing aspects.

According to an eighth aspect, a computer program product including instructions is provided. When the computer program product runs on a computer, the computer is caused to perform the method according to any one of the foregoing aspects.

According to a ninth aspect, a communication system is provided. The communication system includes the first apparatus configured to perform any possible implementation of the first aspect, and includes the second apparatus configured to perform any possible implementation of the second aspect.

With reference to the ninth aspect, in a possible implementation, the communication system further includes the third apparatus configured to perform any possible implementation of the third aspect.

For technical effects brought by any one of the possible implementations of the second aspect to the ninth aspect, refer to technical effects brought by different possible implementations of the first aspect. Details are not described herein again.

It may be understood that the solutions in the foregoing aspects may be combined on a premise that the solutions are not contradictory.

### BRIEF DESCRIPTION OF DRAWINGS

FIG. 1 is a diagram of an architecture of a communication system according to an embodiment of this application;
FIG. 2 is a diagram of a network structure corresponding to a roaming scenario according to an embodiment of this application;
FIG. 3 is a diagram of a structure of a communication apparatus according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of a communication method in a roaming scenario according to an embodiment of this application;
FIG. 9 is a schematic flowchart of a communication method in another roaming scenario according to an embodiment of this application;
FIG. 10 is a schematic flowchart of a communication method in another roaming scenario according to an embodiment of this application; and
FIG. 11 is a diagram of a communication apparatus according to an embodiment of this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, usage of the term like "example" or "for example" is intended to present a relative concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, related technologies in this application are briefly described.

Data connection session: It is referred to as a session for short, is an association between a terminal device and a data network (data network, DN), and is used to provide a data connection service for a user. For example, the data connection session may be a protocol data unit (Protocol Data Unit, PDU) session or a session in another form. The data connection session is used to provide the data connection service. In embodiments of this application, a session in the following embodiments is not limited to the PDU session. A general description is provided herein. Details are not described below again.

Network slice (Network Slice): For example, a physical network is divided into a plurality of virtual logical networks. The physical network is divided based on service requirements such as latency, bandwidth, security, and reliability, to adapt to different application scenarios. Different network slices support different functions and different network function optimization.

Network slice instance (Network Slice instance, NSI): It is a group of network function instances allocated to a deployed network slice and a resource needed by the network slice, for example, a computing resource, a storage resource, or a network resource. NSI IDs may identify different network slice instances.

An identifier of the network slice may be represented by using network slice selection assistance information (network slice selection assistance information, NSSAI). The NSSAI includes one or more pieces of single NSSAI (single NSSAI, S-NSSAI), and is a set of one group of pieces of S-NSSAI.

The S-NSSAI includes a slice/service type (slice/service type, SST) and a slice differentiator (slice differentiator, SD). The SST includes a standardized or operator-defined characteristic and service feature of a network slice. The SD is optional information for supplementing the SST, and is used to distinguish between different network slices of a same SST. The network slice may provide different slice or service types based on SSTs and/or SDs. One network slice may be corresponding to a plurality of network slice instances, or one network slice instance may be corresponding to a plurality of network slices.

The NSSAI includes the following types and functions.

Subscribed NSSAI (Subscribed NSSAI): It is a network slice corresponding to subscription data of the user.

Default NSSAI (Default NSSAI): According to an operator's policy, one or more network slices in the subscribed NSSAI of the user may be set as default NSSAI. When the default NSSAI is set, if a user equipment includes no requested NSSAI in a registration request message (Registration Request), the network uses the default NSSAI to provide a service for the user equipment.

Requested NSSAI (Requested NSSAI): It is NSSAI identification information that is of the network slice and that is included by the user equipment in the registration request message (Registration Request). Specifically, when the user equipment requests a service for the first time, the registration request message may carry configured NSSAI, namely, Configured NSSAI. When the user equipment requests the service again, the registration request message may carry allowed NSSAI as requested NSSAI.

Allowed NSSAI (Allowed NSSAI): It represents one or more pieces of S-NSSAI allowed by a network device in the NSSAI requested by the user equipment. Specifically, the network device may include an Allowed NSSAI network element in a registration accept message (Registration Accept), to notify the user equipment of information about the allowed NSSAI.

Slice replacement and slice recovery: When it is detected that a network slice is unavailable or congested, an original slice may be updated to an alternative slice. For example, a first slice is updated to a second slice. Correspondingly, after the slice replacement, when it is detected that the original slice before the replacement is available again or the congestion is relieved, if a network side determines that a terminal can use the original slice before the replacement again, the alternative slice is updated to the original slice. This is the slice recovery.

During slice deployment, a network slice (S-NSSAI) and/or a network slice instance may be deployed based on a requirement of an operator and/or a requirement for service commercial use. That the slice is unavailable or congested means that the network slice is unreachable due to network link congestion or the like of the deployed network slice and/or network slice instance, or the network slice cannot provide a slice service when the slice is temporarily in an inactive state due to service overload, processing timeout, no response, slice release, or slice management operation of the network slice and/or network slice instance.

In this application, the S-NSSAI identifies and represents the network slice, the NSI ID identifies and represents the network slice instance, the network slice and the network slice instance are collectively referred to as a slice, and the slice replacement or the slice recovery may be replacement or recovery of the network slice (S-NSSAI) or may be replacement or recovery of the network slice instance (NSI ID). Details are not described below.

Then, an implementation environment and an application scenario of embodiments of this application are briefly described.

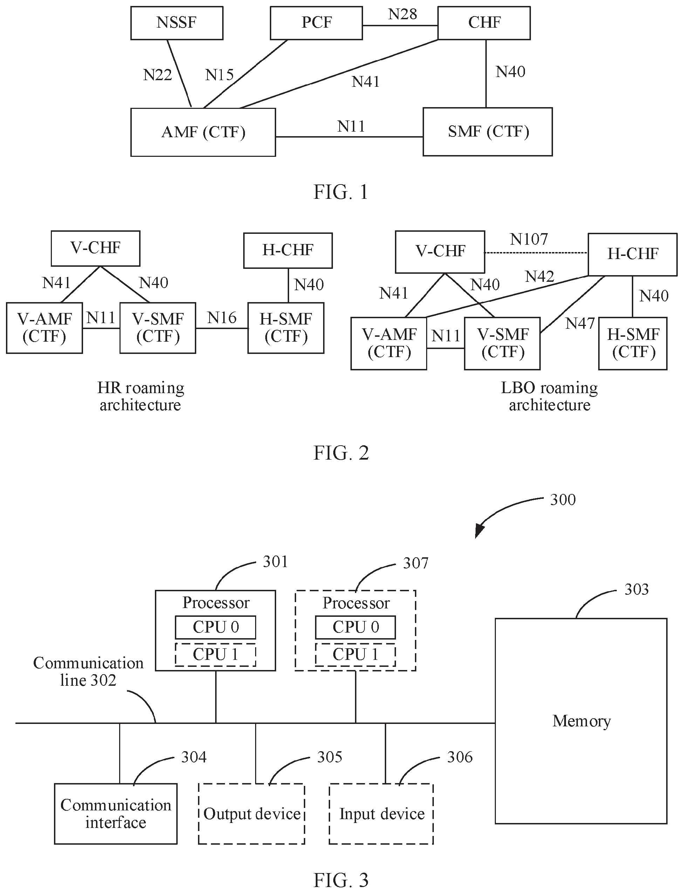

A communication method provided in embodiments of this application may be applied to a network architecture shown in FIG. 1. FIG. 1 shows an interaction relationship between a network function (network function, NF) and an entity and a corresponding interface by using a network service architecture of a 5th generation (5th generation, 5G) mobile communication system as an example. Network functions and entities included in a 3rd generation partnership project (3rd generation partnership project, 3GPP) service-based architecture (service-based architecture, SBA) of the 5G system mainly include: a user equipment (User Equipment, UE), an access network (access network, AN) or a radio access network (radio access network, RAN), a user plane function (user plane function, UPF), a data network (data network, DN), an access and mobility management function (access and mobility management function, AMF), a session management function (session management function, SMF), a policy control function (policy control function, PCF), an application function (application function, AF), a network slice selection function (network slice selection function, NSSF), a charging function (Charging Function, CHF), and the like.

The UE, the (R)AN, the UPF, and the DN are usually referred to as user plane network functions and entities (or user plane network elements), and the other parts are usually referred to as control plane network functions and entities (or control plane network elements). A processing function of the control plane network element in a network is defined by the 3GPP. The control plane network element has a function behavior defined by the 3GPP and an interface defined by the 3GPP. The NF can be used as a network element running on dedicated hardware, or a software instance running on dedicated hardware, or a virtual function that is instantiated on a proper platform, for example, implemented on a cloud infrastructure device.

The UE is a device having a wireless transceiver function, and may also be sometimes referred to as a terminal device, an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or mobile. The terminal may be deployed on land, including an indoor, outdoor, handheld, wearable, or vehicle-mounted device; or may be deployed on a water surface (for example, on a ship); or may be deployed in the air (for example, on a plane, a balloon, and/or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self driving (self driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application.

Main functions of the network elements are described in detail below.

(R)AN: The (R)AN may be an AN or a RAN. Specifically, the (R)AN may include base stations in various forms, for example, a macro base station, a micro base station, and a distributed unit-control unit (distributed unit-control unit, DU-CU). In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, quality of service management, data compression and encryption, and the like on an air interface side.

UPF: It is mainly responsible for forwarding and receiving of user data. The UPF network element may receive downlink data from the DN, and transmit the downlink data to the UE via the (R)AN. The UPF may further receive uplink data from the UE via the (R)AN, and forward the uplink data to the DN.

DN: For example, the DN may be an operator service network, an internet access network, or a third-party service network. The DN may exchange information with the UE by using a PDU session. PDU sessions may be classified into a plurality of types, for example, internet protocol version 4 (internet protocol version 4, IPv4) and IPv6.

AMF: It is mainly responsible for control plane message handling and user mobility management, including mobility status management, temporary user identity allocation, and user authentication and/or authorization, for example, access control, mobility management, registration and deregistration, and/or network element selection. In addition, the AMF is a decision point for slice replacement or slice replacement recovery. The AMF obtains a slice status based on a notification, and determines whether slice replacement and replacement recovery are performed.

SMF: It is mainly used for session management, session establishment, and UE IP address allocation and/or management, and is responsible for session establishment, modification, and release, quality of service (quality of service, QoS) control, and/or the like.

The AMF and/or the SMF each may be integrated with a charging trigger function (Charging Trigger Function, CTF), configured to report charging information to the CHF based on a configured trigger event. For example, in embodiments of this application, the CTF integrated into the SMF may be configured to report charging information related to slice replacement and/or slice recovery to the CHF.

CHF: It is an entity that is responsible for interacting with a core network element in a billing system, is responsible for receiving of charging information reported by a core network element like the AMF and/or the SMF each integrated with the CTF, including used usage information, requested quota management, and/or the like, and may also control a charging operation of the core network element, for example, enabling or disabling a charging trigger event, terminating usage of a quota, or re-granting a quota. The CHF may generate charging data record (Charging Data Record, CDR) information based on the charging information, and send the CDR to the billing system (for example, Billing) to implement charging.

The CDR records duration of a data connection or a session between the user and the network, or traffic usage, and may further include a corresponding fee or the like. The CDR is a basis for charging performed by a communication operator, and can be used to generate a bill of the user or a tenant.

NSSF: It is mainly responsible for network slice selection.

PCF: It is mainly configured to manage policy rules, manage subscription information of the user, and the like.

The AMF receives an access and/or mobility policy delivered by the PCF, and is responsible for managing and controlling mobility of the user. The AMF can interact with the NSSF or the PCF to obtain the slice status. For example, the slice status may specifically include that a slice is unavailable or congested, or the slice is recovered to available, or slice load is normal. The AMF may interact with the PCF through an N15 interface, and interact with the NSSF through an N22 interface, to subscribe to or unsubscribe from slice status notification information or the like.

For a function of another network element included in FIG. 1, refer to related descriptions in a conventional technology. Details are not described herein.

In addition, the communication method provided in embodiments of this application may be further applied to network architectures in a roaming scenario shown in FIG. 2.

5G core network roaming means that in a standalone manner, a terminal of a home network party may use a 5G network in a roaming area by accessing a 5G network of a visited network party. For example, the roaming scenario mainly includes two networking manners such as home routed (Home Routed, HR) and local breakout (Local Breakout, LBO). An access service of a user in an HR architecture or an LBO architecture is provided by a visited operator, and a session anchor in the HR architecture is provided by a home operator. In other words, related communication transmission of a PDU session needs to be routed from a visited network element to a home network element, and the home operator provides a service. The session anchor is a core network element that provides an access service for a terminal and allocates an internet protocol (Internet Protocol, IP) to the terminal. A session anchor in the LBO architecture is provided by the visited operator. In other words, the related communication transmission of the PDU session interacts with the visited network element, and the visited operator provides a service. Therefore, in the roaming scenario, both the visited operator and the home operator in the HR architecture can implement charging, but a service transmission path is long. In the LBO architecture, a service transmission path is short, and service experience is good. However, the home operator cannot obtain a network status of a roaming terminal.

As shown in FIG. 2, when the terminal is roaming, a visited AMF, also referred to as a visited AMF or a visited AMF (Visited-AMF, V-AMF), is responsible for user access and mobility management, interacts with a visited CHF (Visited-CHF, V-CHF) through an N41 interface, and reports charging information related to slice access. The V-CHF is responsible for generating a CDR. In addition, the V-AMF may be responsible for sending a user session request to a V-SMF through an N11 interface.

The visited SMF (Visited-SMF, V-SMF) may interact with a home SMF (Home-SMF, H-SMF) through an N16 interface, and is responsible for session management of a roaming user.

The H-SMF may interact with a home CHF (Home-CHF, H-CHF) through an N40 interface, to report charging information, quota information, and/or the like related to slice usage. The H-CHF generates a CDR.

It should be noted that embodiments of this application are not limited to the foregoing two roaming architectures, and may be further applied to another roaming architecture. For example, in an implementation, the V-AMF may separately interact with the H-CHF and the V-CHF to report charging information related to slice access, and the V-SMF may separately interact with the H-CHF and the V-CHF to report charging information related to slice usage. For another example, the V-AMF interacts with the V-CHF to report charging information related to slice access, and the V-CHF interacts with the H-CHF to forward and report the charging information related to the slice access. The V-SMF interacts with the V-CHF to report charging information related to slice usage, and the V-CHF interacts with the H-CHF to forward and/or report the charging information related to the slice usage.

For slice charging, it can be learned from the foregoing descriptions that the AMF interacts with the CHF, to implement charging for user access to a slice. Charging can be triggered between the AMF and CHF based on events such as user registration, deregistration, N2 connection, N2 release, and/or location change. For example, when the user accesses a service through a slice, the user first registers with a network, and establishes an N2 connection. In this case, chargeable events of the AMF access management function are triggered. When a chargeable event of the registration or the deregistration is triggered, the AMF reports, to the CHF, charging information related to slice access, such as a user identifier of a subscriber, a network slice subscribed to by the user, and/or information about a network slice allowed to be accessed. The CHF can sense a slice actually used by the user. Based on user identifiers or slice identifiers, the CHF can determine, based on association at different granularities, a quantity of registered users actually accessing slices or a quantity of slices actually used by a user. The slice-related information in the charging information reported by the AMF to the billing system includes, for example, a network slice allowed by the user and a network slice subscribed to by the user. Further, in a roaming case, the slice-related information may further include a home network slice of the user and/or a visited serving network slice.

In addition, the SMF interacts with the CHF, to implement charging of the network for usage of slices by the user. A specific implementation process includes: The user or the network initiates a PDU session operation, including establishment, modification, or release of a PDU session. The SMF interacts with the CHF to implement charging for usage of slices, for example, traffic-based charging, duration-based charging, or session-based charging. The SMF reports, to the CHF, an identifier of the PDU session, an identifier of a user or tenant subscribing to the slice, an identifier of the used slice, and/or quota information. The quota information may include charging information about the slice usage, such as requested used quota usage and/or actually used quota usage, and is reported to the CHF.

When requesting to transfer data traffic or duration, a user plane may include requested quota information in a charging request message, and the CHF includes granted quota information in a charging response message. The SMF may determine usage of a service by the user based on whether a quota is granted. Specifically, if the CHF grants no quota or fails to grant a quota, the SMF may terminate the service. If the CHF grants a quota, the SMF may count used usage, and report charging information of the used usage to the CHF.

The SMF interacts with the CHF. Charging may be performed at a granularity of a PDU session, and independent charging may be performed for a PDU session of each terminal. Both charging resource creation and charging processing are independent charging and do not interfere with each other. For charging processing of the PDU session, online and/or offline convergent charging mechanisms may be used for charging. Charging information collection and/or credit control on quota management are/is based on traffic or duration. Collected usage information is usually associated with granted quota information. For example, if the CHF grants a quota of 5 M for the PDU session, the SMF can allow only 5 M traffic for the PDU session. Correspondingly, if used usage of the PDU session collected by the SMF is 5 M traffic, used usage reported to the CHF is 5 M traffic.

For slice charging, a user may be connected to a plurality of slices. A charging object of the SMF may be terminal user-based charging or PDU session-based charging. During information collection, information about the slice accessed by the user needs to be carried, and information about S-NSSAI needs to be reported. The billing system can identify, based on the S-NSSAI, a PDU session of a single access user of a single network slice, traffic of the single network slice, and/or credit control on quota management.

Further, the CHF may implement charging at different granularities through charging association, for example, service-based charging, user-based charging, or tenant-based charging. Specifically, the CHF may associate, based on PDU session identifiers, used usage of charging information of a same PDU session identifier in a plurality of charging messages reported separately or for a plurality of times, to implement service usage charging. For another example, the CHF may associate, based on user identifiers, used usage of charging messages of a same user identifier in a plurality of charging messages reported separately or for a plurality of times, to implement charging for usage by the user. For another example, the CHF may associate, based on slice identifiers, usage used by different users corresponding to a same slice identifier in a plurality of charging messages reported separately or for a plurality of times, to implement slice usage charging. Further, the CHF can further implement charging based on a combination of different granularities, for example, a combination of a user granularity and a slice granularity, to distinguish between charging for usage by different users in a same slice.

The CHF may generate one or more corresponding CDRs based on the charging information reported by the SMF or the AMF. The CHF sends the CDRs to a billing system via a charging gateway function (Charging Gateway Function, CGF) for subsequent CDR association. There may be different bill or business models based on an actual business model deployed by an operator. This is not limited in this application.

For a slice replacement or slice recovery scenario, in the foregoing charging information collection and/or charging management mechanism, a slice change cannot be dynamically sensed, and an association relationship between a network slice actually used by a user and/or an alternative network slice cannot be accurately identified, or traffic of the network slice and/or the alternative network slice and/or credit control on quota management cannot be identified. Consequently, charging is inaccurate. For example, the alternative slice may be a slice subscribed to by the user, or may not be a slice subscribed to by the user. When slice replacement occurs, traffic of only an original slice can be counted based on an S-NSSAI identifier corresponding to the original slice, and traffic information of only the original slice is found through matching in a subscription management relationship of the tenant or the user. In other words, charging information before the slice replacement cannot be associated with charging information after the slice replacement. In this case, used usage of the alternative slice cannot be accumulated to charging information of the user or the tenant, or the accumulation is incomplete or inaccurate. Whether a slice tenant shares a network slice (one piece of S-NSSAI serves a plurality of tenants) or exclusively uses a network slice (one piece of S-NSSAI serves only one tenant), a slice and an alternative slice may be used, or charging information of slices used by different tenants in different time periods is inaccurate. Consequently, the charging information may be inaccurate, or subsequent bill information may be inconsistent, resulting in a dispute.

To resolve the foregoing problem, in this application, an association relationship is established between slices before and after slice replacement, to implement charging association in a slice replacement or slice recovery scenario. This improves charging accuracy and implements accurate charging.

It should be noted that this application may be applied to charging management for slice replacement and/or slice recovery in a non-roaming scenario, and charging for slice replacement and/or slice recovery in a roaming scenario.

In addition, a slice deployment mode is not limited in embodiments of this application. For example, an SMF or a UPF may be independently deployed for each network slice in a network, or one SMF or one UPF may be deployed for a plurality of network slices in the network. Charging procedures in different deployment scenarios may be different. This is not limited in this application.

It should be noted that the network architecture shown in FIG. 1 or FIG. 2 is merely used as an example, and is not intended to limit the technical solutions of this application. A person skilled in the art should understand that, in a specific implementation process, another network element or apparatus may be further included, and quantities of network devices, terminals, and/or core network devices may also be determined based on a specific requirement.

Optionally, each network element shown in FIG. 1 or FIG. 2 may be a device, or a functional module in the device, or a logical functional unit. It may be understood that the foregoing function may be a network element in a hardware device, for example, a communication chip in a mobile phone, or may be a software function running on dedicated hardware or a virtualized function instantiated on a platform (for example, a cloud platform).

For example, each network element in FIG. 1 or FIG. 2 may be implemented by using a communication apparatus 300 in FIG. 3. FIG. 3 is a diagram of a hardware structure of a communication apparatus that may be used in an embodiment of this application. The communication apparatus 300 includes at least one processor 301, a communication line 302, a memory 303, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is any apparatus like a transceiver, is configured to communicate with another device or a communication network. The communication interface 304 is, for example, an Ethernet interface, a RAN interface, or a wireless local area network (wireless local area network, WLAN) interface.

The memory 303 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of an instruction or a data structure and that can be accessed by a computer, but is not limited thereto. The memory may exist independently, and is connected to the processor through the communication line 302. The memory may alternatively be integrated with the processor. The memory provided in embodiments of this application may be usually non-volatile. The memory 303 is configured to store computer-executable instructions for executing the solutions in this application, and the processor 301 controls the execution. The processor 301 is configured to execute the computer-executable instructions stored in the memory 303, to implement the method provided in embodiments of this application.

Optionally, the computer-executable instructions in this embodiment of this application may also be referred to as application program code. This is not specifically limited in embodiments of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors such as the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

The following describes in detail the communication method provided in embodiments of this application.

It should be noted that names of messages between network elements, names of parameters in the messages, or the like in the following embodiments of this application are merely examples, and there may be other names during specific implementation. This is not specifically limited in embodiments of this application.

It may be understood that, in embodiments of this application, network elements such as a first apparatus and a second apparatus may perform a part or all of steps in embodiments of this application. These steps are merely examples. In embodiments of this application, other steps or variations of various steps may be also performed. For example, the first apparatus may be an SMF, and the second apparatus may be a CHF. In addition, the steps may be performed in a sequence different from a sequence presented in embodiments of this application, and not all the steps in embodiments of this application may be necessarily performed.

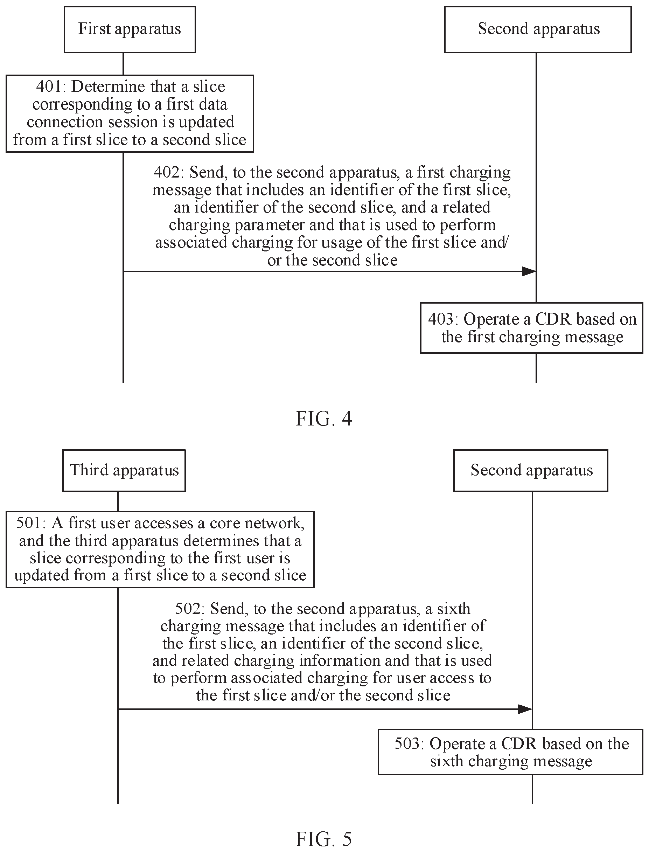

FIG. 4 shows a communication method according to an embodiment of this application. The method includes the following steps.

401: A first apparatus determines that a slice corresponding to a first data connection session is updated from a first slice to a second slice.

In other words, the first apparatus determines that the slice corresponding to the first data connection session is replaced, for example, the first slice is replaced with the second slice to provide a slice service; or determines that the slice corresponding to the first data connection session is recovered, for example, the first slice is recovered to the second slice to provide a slice service.

An original slice or an alternative slice corresponding to a user is not limited in this application. For example, in a slice replacement scenario, the first slice may be the original slice, and the second slice may be the alternative slice. For example, in a slice recovery scenario, the first slice may be the alternative slice, and the second slice may be the original slice. In addition, the slice corresponding to the first data connection session may be only replaced or recovered, or a plurality of slices corresponding to the first data connection session may be all replaced and/or recovered. This is not limited in this application.

For example, a data connection session may be specifically a PDU session or a data connection session of another type. This is not limited in this application. In the following embodiments of this application, an example in which the data connection session is the PDU session is merely used for description. For example, a slice corresponding to a first PDU session is updated from the first slice to the second slice. Details are not described below.

The first apparatus may be a logical function, an entity, or a network element that is responsible for session management in a network. For example, the first apparatus may be an SMF.

In an implementation, the first apparatus may determine, based on a received message, that the slice replacement or the slice recovery occurs for the first data connection session. For example, the first apparatus may receive a message from a logical function AMF for access and mobility management, and determine that the slice replacement or the slice recovery occurs for the first data connection session.

For example, the AMF may send a PDU session operation request message to the SMF. The message carries a notification that the slice corresponding to the first PDU session is replaced or recovered, and carries an identifier of a slice before the update and/or an identifier of a slice after the update.

Further, for example, the AMF may receive a notification message sent by another network element, to obtain a status of a serving slice accessed by a user terminal. For example, when detecting that the first slice is unavailable or congested, an NSSF or a PCF determines that the first slice is unavailable or congested, and sends a notification message carrying an identifier of the first slice to the AMF. The notification message indicates that the first slice is unavailable or congested. When the network detects that the network slice is unavailable or congested, the AMF may determine, based on the notification message, whether the slice replacement needs to occur.

If the AMF determines that the slice replacement is to occur, the AMF may send the PDU session operation request message to the SMF. The message may carry the identifier of the slice after the update, for example, an identifier of the second slice, or may carry the identifiers of the slices before and after the update, for example, an identifier of the first slice and an identifier of the second slice (for example, S-NSSAI and alternative S-NSSAI). The PDU session operation request message may be specifically a PDU session establishment request message or a PDU session update request message.

In this case, the SMF may transfer, based on the slice identifier carried in the PDU session operation request message from the AMF, an original slice associated with such a PDU session to an alternative slice, for example, update the original slice from the first slice to the second slice. Optionally, the SMF may return, to the AMF, a corresponding PDU session operation response message, for example, a PDU session establishment response message or a PDU session update response message.

In an implementation, the SMF receives slice information after the update in the PDU session operation request message sent by the AMF, and determines that the slice replacement or the slice recovery occurs for the PDU session. Then, the SMF may determine whether to retain the PDU session or whether to release and re-establish the PDU session, to determine a subsequent charging information reporting procedure.

A session and service continuity mode (Session and Service Continuity Mode, SSC) corresponding to the PDU session includes a mode 1, a mode 2, and a mode 3. The SSC mode 1 means that internet protocol (Internet Protocol, IP) continuity is provided, and the PDU session is preserved. The SSC mode 2 means that the IP continuity is not provided, and the PDU session may be first released and then re-established. For example, an operation of ending the first PDU session is performed, and then an operation of re-establishing a second PDU session is performed. The SSC mode 3 means that the IP continuity is provided temporarily, and the PDU session may be first re-established and then released. For example, an operation of re-establishing the second PDU session is performed, and then an operation of ending the first PDU session is performed.

In addition, in a slice recovery scenario, if the AMF receives a notification message indicating that the original slice is available or the congestion is relieved, the AMF may determine that a slice recovery operation needs to be performed. The AMF may send, to the SMF, the PDU session operation request message carrying an identifier (for example, the S-NSSAI and an identifier of the alternative slice) of the original slice. For example, the PDU session operation request message may be the PDU session establishment request message.

In this case, the SMF transfers, based on the slice identifier carried in the PDU session operation request message from the AMF, the alternative slice associated with the PDU session to the original slice, for example, update the original slice from the first slice to the second slice. Optionally, the SMF may return, to the AMF, the PDU session operation response message, for example, the PDU session establishment response message.

402: The first apparatus sends, to a second apparatus, a first charging message including the identifier of the first slice and the identifier of the second slice. The first charging message is used to perform associated charging for usage of the first slice and/or the second slice.

In an implementation, if determining that the current first data connection session meets a charging-related trigger event, the first apparatus sends the first charging message to the second apparatus. The first charging message includes a related charging parameter. For example, the first charging message may include a charging parameter corresponding to the first slice and a charging parameter corresponding to the second slice.

The charging parameter is information or a parameter that is related to usage of a slice and that is generated by the network based on a single data connection session corresponding to a single user, for example, information such as duration and/or traffic corresponding to usage of the slice by the user. For example, if the network performs charging based on duration in which the user uses the slice, the charging parameter may include information about duration in which the first slice is used for a first data connection session corresponding to a first terminal user, where for example, the charging information includes a duration indicator T1, and/or information about traffic used through the first slice by the first data connection session corresponding to a first terminal, or quota information applied for. Optionally, the charging parameter may include the charging parameter corresponding to the first slice and/or the charging parameter corresponding to the second slice.

Charging trigger events corresponding to the first apparatus may include a trigger event corresponding to slice replacement, a trigger event corresponding to slice recovery, a trigger event corresponding to session release, a trigger event corresponding to session establishment, or the like. If the first apparatus determines that a trigger condition corresponding to any one of the foregoing trigger events is met, the first apparatus may report a related charging message to the second apparatus.

Determining, based on the slice corresponding to the first data connection session being updated from the first slice to the second slice, that the trigger event corresponding to the slice replacement is met is: determining that the second slice replaces the first slice as the slice corresponding to the first data connection session. Determining, based on the slice corresponding to the first data connection session being updated from the first slice to the second slice, that the trigger event corresponding to the slice release is met is: determining that the first data connection session is released. Similarly, determining, based on the slice corresponding to the first data connection session being updated from the first slice to the second slice, that the trigger event corresponding to the slice creation is met is: determining that the first data connection session is released.

For example, the first apparatus determines, based on the slice corresponding to the first data connection session being updated from the first slice to the second slice, that the trigger event corresponding to the slice replacement is met, and sends the first charging message to the second apparatus.

Alternatively, the first apparatus determines, based on the slice corresponding to the first data connection session being updated from the first slice to the second slice, that the trigger event corresponding to the slice recovery is met, and sends the first charging message to the second apparatus.

Alternatively, if the slice corresponding to the first data connection session is updated from the first slice to the second slice, and the first data connection session is released due to the slice replacement or the slice recovery, the first apparatus determines that the trigger event corresponding to the release of the first data connection session is met, and sends the first charging message to the second apparatus.

Alternatively, if the slice corresponding to the first data connection session is updated from the first slice to the second slice, and a second data connection session is established due to the slice replacement or the slice recovery, the first apparatus determines that the trigger event corresponding to the establishment of the second data connection session is met, and sends a second charging message to the second apparatus. The second charging message includes the identifier of the first slice and the identifier of the second slice, and is used to perform associated charging for usage of the first slice and/or the second slice.

It should be noted that a sequence of the foregoing process of releasing and establishing the data connection sessions by the first apparatus is not limited in this application. To be specific, the first apparatus may first release the first data connection session and then establish the second data connection session, or the first apparatus may first establish the second data connection session.

In an implementation, the second apparatus may be a charging function CHF, or another network element including the CHF, or another logical function or physical unit that can implement the charging function. This is not limited in this application.

In an implementation, an identifier of a slice may be S-NSSAI and/or an NSI ID. For example, the first slice may be S-NSSAI #1, and the identifier of the second slice may be S-NSSAI #2; or the first slice may be an NSI ID #1, and the identifier of the second slice may be an NSI ID #2.

Correspondingly, the second apparatus receives the first charging message from the first apparatus, and may determine, based on content carried in the first charging message, that the slice replacement or the slice recovery occurs for the first PDU session. For example, the first charging message may include first indication information indicating the slice replacement or the slice recovery, or the first charging message implicitly indicates the slice replacement or the slice recovery by using the identifiers of the slices before and after the update. The following describes detailed indication manners. Details are not described herein.

The first charging message includes the identifier of the first slice and the identifier of the second slice, and is used to perform corresponding associated charging for a PDU session caused by the slice replacement or the slice recovery. In other words, the associated charging in this application means: Slices corresponding to the PDU sessions before and after the slice update are different, but there is associated usage of the slices by the user before and after the update. For example, in a PDU session preservation scenario, the CHF may determine, based on an identifier of the first PDU session and the identifiers of the first slice and the second slice that are carried in the received first charging message, to replace a serving slice of the first PDU session. Therefore, the CHF may associate charging for the first slice and charging for the second slice with charging for the same PDU session. For example, different indication bits in the charging message may indicate the identifier of the original slice before the slice replacement and the identifier of the alternative slice after the slice replacement.

Alternatively, in a PDU session re-establishment scenario, the first charging message sent by the SMF to the CHF includes an identifier of the first PDU session, an identifier of the second PDU session, the identifier of the first slice, and the identifier of the second slice, so that the CHF can determine the PDU session re-establishment scenario based on the identifier of the first PDU session and the identifier of the second PDU session, and may, for example, associate charging for the first slice and charging for the second slice respectively with the first PDU session and the second PDU session, that is, associate the slices before and after the update with charging for different PDU sessions. In this way, the charging function can determine the slice replacement or the slice recovery based on association information, so that the charging function can associate charging information before and after the slice update based on the association information.

For example, in the slice recovery scenario, if the serving slice corresponding to the first PDU session is recovered from the second slice to the first slice, and the first PDU session is preserved, the SMF may send a charging message to the CHF. The charging message carries the identifier of the first PDU session, the identifier of the second slice, and the identifier of the first slice. The CHF receives the charging message, determines, based on carried information, that the first PDU session is preserved, and associates charging for usage of the first slice and the second slice with the first PDU session. The CHF charges, based on the identifier of the first slice and the identifier of the first slice, for usage of the first slice used for the first PDU session.

For another example, in the slice recovery scenario, the PDU session is released and re-established. For example, the second PDU session is released, a third PDU session is established, and the serving slice is recovered from the second slice to the first slice. In this case, the SMF may send a charging message to the CHF. The charging message carries the identifier of the second PDU session, an identifier of the third PDU session, the identifier of the second slice, and the identifier of the first slice. The identifier of the first slice corresponds to the identifier of the third PDU session, indicating that the third PDU session accesses the network through the first slice. The identifier of the second slice corresponds to the second PDU session, indicating that the second PDU session accesses the network through the second slice. The CHF receives the charging message, and determines, based on carried information, that the PDU session is re-established. In this case, charging for usage of the first slice and the second slice may be respectively associated with the second PDU session and the third PDU session. Alternatively, the CHF charges for usage of the first slice based on the identifier of the first slice and the identifier of the third PDU session.

In an implementation, the first charging message may include quota usage information corresponding to the first slice or quota request information corresponding to the second slice. Alternatively, the first charging message includes the quota usage information corresponding to the first slice and/or the quota request information corresponding to the second slice.

For example, in the foregoing scenario in which the PDU session is first released and then re-established, the first charging message may include the quota usage information of the first slice, and the second charging message sent by the SMF to the CHF may include the quota request information of the second slice. In the scenario in which the PDU session is first re-established and then released, the first charging message may include the quota request information of the second slice, and the second charging message sent by the SMF to the CHF may include the quota usage information of the first slice. In the PDU session preservation scenario, the first charging message may include the quota usage information of the first slice and/or the quota request information of the second slice.

In an implementation, in the first charging message, quota management corresponding to the first slice may be identified by using the first slice, and quota management corresponding to the second slice may also be identified by using the first slice. In other words, a quota request corresponding to the second slice may be associated with the identifier of the first slice, so that a slice usage quota of a same user is not affected due to the slice replacement or recovery, to implement accurate charging in the slice replacement or slice recovery scenario, and improve charging flexibility.

For example, a first user subscribes to the first slice. For example, slice replacement occurs for a first PDU session of the first user, and the first slice is replaced with the second slice. In this case, the first user uses the second slice based on the subscription of the user to the first slice (the first user may not subscribe to the second slice). Therefore, during the slice replacement, used usage of the second slice by the user needs to be associated with a usage quota of the first slice of the first user. When charging is performed based on charging information, associated charging needs to be performed based on the first charging message, the second charging message, and a mapping relationship between the first slice and the second slice indicated in the first charging message and the second charging message.

The following describes charging interaction procedures in different implementation scenarios with reference to different embodiments.

403: The second apparatus operates a CDR based on the first charging message.

The charging information corresponding to the slice before the update and the charging information corresponding to the slice after the update, for example, charging information corresponding to the S-NSSAI #1 and charging information corresponding to the S-NSSAI #2, need to be added to the CDR.

In an implementation, in the PDU session preservation scenario, the second apparatus may update the CDR, and add charging information of the first slice and charging information of the second slice. In this way, the CHF may associate the charging information of the first slice and the charging information of the second slice with a charging CDR corresponding to one PDU session.

Alternatively, in another implementation, in the PDU session re-establishment scenario, when the first PDU session is released, the second apparatus may add charging information corresponding to the alternative S-NSSAI and the original S-NSSAI such as the S-NSSAI #1 and the S-NSSAI #2, when closing a first CDR corresponding to a first PDU session. When the second PDU session is established, the second apparatus creates a second CDR corresponding to a second PDU, including the charging information corresponding to the alternative S-NSSAI and the original S-NSSAI. A sequence of closing the first CDR and creating the second CDR by the CHF is not limited, and execution sequences of operating corresponding CDRs in different SSC modes may be different. In this case, a billing system may include but is not limited to a billing system/domain, and may associate the charging information of the first slice and the second slice with a plurality of charging CDRs, for example, including at least the first CDR and the second CDR, of different PDU sessions.

Specifically, for charging of the first terminal user, the billing system may associate, based on an identifier of the first terminal user, an identifier of a slice, and/or an identifier of an updated slice (for example, the identifier of the first slice and the identifier of the second slice) in the CDR, the charging CDR corresponding to the first slice corresponding to the first PDU session with the charging CDR of the second slice corresponding to the second PDU that is established due to the slice update, that is, associate the charging CDRs with charging of a same terminal user, namely, the first terminal user, to ensure charging accuracy.

Alternatively, for charging of a slice tenant, for example, a first tenant, the billing system may associate, based on the identifier of the slice and/or the identifier of the updated slice (for example, the identifier of the first slice and the identifier of the second slice) in the CDR, the charging CDR corresponding to the first slice corresponding to the first PDU session with a charging CDR of the second slice corresponding to the second PDU that is established due to the slice update, that is, associate the charging CDRs with charging of a same slice tenant, for example, the first tenant. In other words, the billing system associates, with charging for usage by the first tenant, charging that is for usage of the second slice by the user and that is generated in a process in which the second slice provides a service because the first slice is replaced due to congestion of the first slice when the first tenant rents and uses the first slice. In this way, charging is accurate.

The foregoing implementations are described by using a non-roaming scenario as an example. The communication method provided in this application is also applicable to a roaming scenario. In an implementation, if slice replacement or slice recovery occurs for a current PDU session of the user in the roaming scenario, a home operator may notify a visited network element V-AMF if sensing a slice update, to implement associated charging for the slice replacement. The slice update in the roaming scenario may include a slice update of the home operator, a slice update of a visited operator, or both the slice updates on slices of the home operator and the visited operator. The visited AMF needs to determine, based on a slice status, whether to perform slice replacement or slice recovery. Therefore, the V-AMF needs to be notified regardless of whether a slice of a V-PLMN or a slice of an H-PLMN is unavailable or congested.

For example, if the slice replacement or the slice recovery occurs for the H-PLMN, an H-NSSF may notify the V-PLMN of updated slice information of the home operator; or if the slice replacement or the slice recovery occurs for the V-PLMN, a V-NSSF may notify an H-NSSF of updated slice information of the visited operator, or the V-NSSF directly interacts with the V-AMF to notify the visited operator of the updated slice information; or if the slice change and/or the slice recovery occur/occurs for both the H-PLMN and the V-PLMN, an H-NSSF may notify a V-NSSF of the V-PLMN of the updated slice information of the home operator, and the V-NSSF directly interacts with the V-AMF to notify the updated slice information of the visited operator and the home operator. The V-NSSF may notify the H-NSSF of the updated slice information of the visited operator.

In an implementation, the first apparatus (for example, a V-SMF) may send a third charging message to a session management function SMF (for example, an H-SMF) corresponding to the home operator, to indicate that a visited slice corresponding to the first data connection session is updated from the first slice to the second slice. The third charging message includes the identifier of the first slice, the identifier of the second slice, and a related charging parameter.

For example, the first slice and the second slice may be slices of the visited operator. In other words, the first apparatus determines that a slice of the visited operator is replaced or recovered, and is updated from the first slice to the second slice.

In addition, in the roaming scenario, the V-SMF may report a charging message to a V-CHF and/or a charging message to an H-CHF. The charging message is used to determine that the slice corresponding to the first data connection session is updated from the first slice to the second slice. The charging message includes the identifier of the first slice, the identifier of the second slice, and an identifier of a third slice. The first slice and the second slice are network slices of the visited operator, and the third slice is a network slice of the home operator.

Optionally, for different roaming modes, the charging message is reported in different manners. For an LBO roaming mode, the V-SMF may report charging messages to the V-CHF and the H-CHF, or the V-SMF reports a charging message to the V-CHF and then the V-CHF forwards the charging message to the H-CHF. For an HR roaming mode, that the V-SMF reports the charging message to the V-CHF further includes that the H-SMF reports a charging message to the V-CHF.

Optionally, the charging message may further include the identifier of the third slice, and the third slice may be the network slice of the home operator.

For another example, the first slice and the second slice may be slices of the home operator. In other words, the first apparatus determines that a slice of the home operator is replaced or recovered, and is updated from the first slice to the second slice. Optionally, the charging message may further include an identifier of a third slice, and the third slice may be a network slice of the visited operator.

Further, optionally, the charging message may further include an identifier of a fourth slice. The fourth slice is associated with the third slice, indicating that the third slice is updated to the fourth slice. In other words, slices of both the visited operator and the home operator are replaced or recovered.

For example, if the third slice and the fourth slice are network slices of the home operator, the charging message may indicate that a home slice corresponding to the first data connection session is updated from the third slice to the fourth slice. Alternatively, if the third slice and the fourth slice are network slices of the visited operator, the charging message may indicate that a visited slice corresponding to the first data connection session is updated from the third slice to the fourth slice.

In the foregoing embodiments of the roaming scenario, the first apparatus may be an SMF corresponding to the visited operator of the first data connection session.

In an implementation, the charging information reported by the first apparatus to the second apparatus may be extended, and the identifier of the second slice may be added. For example, the identifier of the second slice in the first charging message may be carried in at least one of the following information: protocol data unit PDU session charging information carried in the first charging message, or a network slice identifier carried in the PDU session charging information, or an alternative network slice identifier carried in the PDU session charging information, or a used unit container (Used Unit Container, UUC) carried in the PDU session charging information, or network slice mapping information carried in the PDU session charging information, or the like. This is not limited in this application.

In the roaming scenario, the charging information reported by the first apparatus to the second apparatus is extended, and the slice mapping information, including identifiers of an original slice and an alternative slice that correspond to the H-PLMN and/or identifiers of an original slice and an alternative slice that correspond to the V-PLMN, may be added. Specifically, identification information of slices may be carried in the PDU session charging information or the UUC. This is not limited in this application.

In an implementation, the first charging message may include first indication information, indicating that the slice replacement or the slice recovery occurs for the first data connection session. For example, the first indication information may be added to the first charging message, and the first indication information indicates that the slice replacement occurs. When charging reported by the AMF or the SMF includes both the identifier of the original slice and the identifier of the alternative slice, the CHF can determine, based on the slice replacement indication carried in the first charging message, that the slice replacement occurs, and the original slice is updated to the alternative slice. Alternatively, the first indication information indicates that the slice recovery occurs, and the charging reported by the AMF or the SMF includes both the identifier of the original slice and the identifier of the alternative slice. The CHF may determine, based on the slice recovery identifiers carried in the first charging message, that the slice recovery occurs, and the alternative slice is updated to the original slice.

For example, setting an indication bit corresponding to the first indication information to 1 may indicate the slice replacement; or setting an indication bit corresponding to the first indication information to 0 may indicate the slice recovery. Alternatively, the charging message including an indication bit corresponding to the first indication information may indicate the slice replacement; or the charging message not including an indication bit corresponding to the first indication information may indicate the slice recovery.

For another example, whether the slice replacement or the slice recovery occurs may be implicitly indicated based on an indication bit ranking of a slice identifier. For example, a former indication bit ranking of a slice identifier indicates slice information before the update, and a latter indication bit ranking of a slice identifier indicates slice information after the update. In this case, when the slice replacement occurs, the identifier of the first slice is former and the identifier of the second slice is latter. This indicates that the original slice is replaced with the alternative slice. If the slice recovery occurs subsequently, indication rankings of the identifier of the second slice and the identifier of the first slice may be exchanged. A specific indication manner of the first indication information is not limited in this application.

In the foregoing implementations, the charging message reported to the charging function carries the slice information before and after the update, so that the charging function can perform, based on the association relationship between the slices, associated charging for usage of the slices associated with the data connection session, to implement accurate charging in the slice replacement or slice recovery scenario, and improve the charging accuracy.

The foregoing implementations describe the charging, reported by the session management function, related to the usage of the slices associated with the data connection session. In addition, a charging scenario may further include charging, reported by the access and mobility management function, related to access to a slice associated with a user access service. It can be learned from the foregoing descriptions that the AMF interacts with the CHF to implement charging for user access to the slice. Specifically, the AMF may trigger charging based on an event, for example, user registration, deregistration, N2 connection, N2 release, and/or location change.

As shown in FIG. 5, the method may further include the following steps.

501: A first user accesses a core network, and a third apparatus determines that a slice corresponding to the first user is updated from a first slice to a second slice.

The third apparatus may be a logical function, an entity, or a network element that is responsible for access and mobility management in a network. For example, the third apparatus is an AMF.

The third apparatus may determine, based on a received notification message related to a slice status, for example, a notification message received from an NSSF, that the slice corresponding to the first user is replaced or recovered. For example, the slice corresponding to the first user may be updated from the first slice to the second slice. For a specific process in which the third apparatus determines that the slice is replaced or recovered, refer to the related descriptions of step 401. Details are not described herein again.

502: The third apparatus sends a sixth charging message to a second apparatus. The sixth charging message includes an identifier of the first slice, an identifier of the second slice, and a related charging parameter. The sixth charging message is used to perform associated charging for user access to the first slice and/or the second slice.

For example, the charging parameter may include slice access-related information or parameter that is of the network and that is generated when a single user accesses a slice, as described above. For example, a charging parameter included in a charging message reported by the AMF to a CHF may include a timestamp or the like related to user registration or N2 connection.

In an implementation, the third apparatus determines that a current network status of the first user meets a charging-related trigger event, and may optionally send a charging message, for example, the sixth charging message, to the second apparatus. Charging trigger events corresponding to the third apparatus may include a trigger event corresponding to registration management, a trigger event corresponding to connection management, a trigger event corresponding to a location update, or the like. If the third apparatus determines that a trigger condition corresponding to any one of the foregoing trigger events is met, the third apparatus may report a related charging message, for example, the sixth charging message, to the second apparatus.

For example, the third apparatus determines, based on the slice corresponding to the first user being updated from the first slice to the second slice, that the first user meets the trigger event corresponding to the registration management, and sends the charging message to the second apparatus. The trigger event corresponding to the registration management may include an event corresponding to registration or deregistration requested by the user. In other words, the third apparatus determines the slice is replaced or recovered, and may trigger a charging request corresponding to the registration management when receiving a registration request or a deregistration request of the first user.

The third apparatus determines, based on the slice corresponding to the first user being updated from the first slice to the second slice, that the first user meets the trigger event corresponding to the connection management, and sends the charging message to the second apparatus. The trigger event corresponding to the connection management may include a user request for N2 connection, or release of the N2 connection, or the like. In other words, the third apparatus determines the slice is replaced or recovered, and may trigger a charging request corresponding to the connection management when receiving an N2 connection request or an N2 connection release request of the first user.

The third apparatus determines, based on the slice corresponding to the first user being updated from the first slice to the second slice, that the first user meets the trigger event corresponding to the location update, and sends the charging message to the second apparatus. In other words, the third apparatus determines the slice is replaced or recovered, and may trigger a charging request corresponding to the location update when receiving a location change message of the first user.

503: The second apparatus operates a CDR based on the charging message.

Charging information corresponding to a slice before the update and a slice after the update, for example, charging information corresponding to the first slice S-NSSAI #1 and the second slice S-NSSAI #2, may be added to the CDR.

For example, the second apparatus may create the CDR based on the charging message corresponding to the registration management, to generate a charging bill related to the registration management. The CDR may include the charging information corresponding to the first slice and/or the charging information corresponding to the second slice.

The foregoing implementations are described by using a non-roaming scenario as an example. The communication method provided in this application is also applicable to a roaming scenario. In an implementation, if slice replacement or slice recovery occurs in a roaming scenario of the user, for example, including a slice update of a home operator and/or a slice of a visited operator, an AMF of the home operator may notify a charging function H-CHF of the home operator and/or a charging function V-CHF of the visited operator, to implement associated charging before and after the slice update.

In an implementation, the third apparatus is a V-AMF. The foregoing step 401 may be specifically: The V-AMF sends a charging message to the V-CHF. The charging message includes an identifier of the first slice, an identifier of the second slice, and a related charging parameter, and is used to perform associated charging for access to the first slice and/or the second slice.

The method may further include: The V-AMF sends a charging message to the H-CHF. The charging message includes an identifier of the first slice and an identifier of the second slice, and is used to perform associated charging for access to the first slice and/or the second slice.

For example, the first slice and the second slice may be slices of the visited operator. In other words, the slice of the visited operator corresponding to the first user is replaced or recovered, and is updated from the first slice to the second slice. Alternatively, the first slice and the second slice may be slices of the home operator. In other words, the slice of the home operator corresponding to the first user is replaced or recovered, and is updated from the first slice to the second slice.

Further, optionally, the request message may further include identifiers of a third slice and a fourth slice. The fourth slice is associated with the third slice, indicating that a serving slice corresponding to the first user is updated from the third slice to the fourth slice. In other words, slices of both the visited operator and the home operator are replaced or recovered. For example, charging information reported by the V-AMF to the V-CHF and the H-CHF may include original S-NSSAI corresponding to an H-PLMN and alternative S-NSSAI of the H-PLMN, and/or original S-NSSAI of a V-PLMN and alternative S-NSSAI of the V-PLMN.

In the foregoing implementations, the charging message reported to the charging function carries slice information before and after the update, so that the charging function can perform access-related charging for associated slices based on the association relationship between the slices, to implement accurate charging in a slice replacement or slice recovery scenario, and improve charging accuracy.

For example, the following describes, with reference to specific embodiments, implementation processes in which this application is applied to different scenarios.

### Embodiment 1

When this application is applied to a non-roaming scenario, slice replacement occurs: A first slice (with an identifier S-NSSAI #1) is updated to a second slice (with an identifier S-NSSAI #2). An SMF determines a scenario in which a PDU session is to be retained.

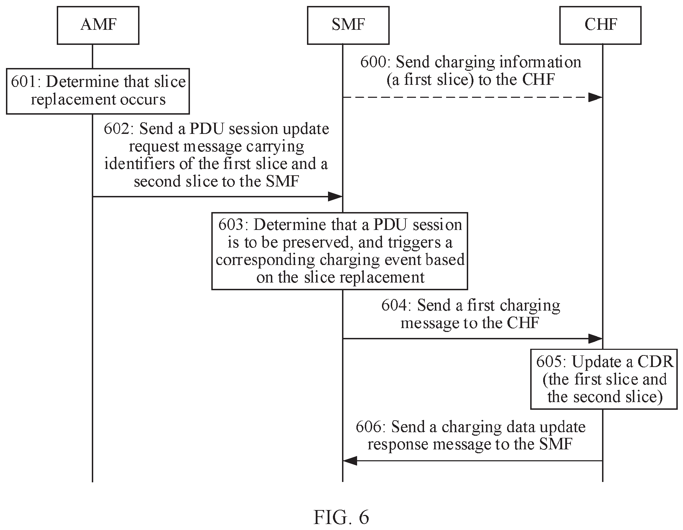

As shown in FIG. 6, the method includes the following steps.

601: An AMF determines that the slice replacement occurs.

Specifically, the AMF may receive slice status notification information, indicating that the second slice replaces the first slice as a used slice, and the AMF determines the slice replacement based on notification information. For example, the first slice is the S-NSSAI #1, and the second slice is the S-NSSSAI #2. For a specific process in which the AMF determines the slice replacement, refer to the related descriptions of step 401 in the foregoing embodiment. Details are not described herein again.

Before step 601, a terminal has established a first PDU session, and a charging session between the corresponding SMF and a CHF has also been established. The following steps are further included.

600: The SMF sends charging information to the CHF.

The charging information reported by the SMF to the CHF may include an identifier of the first PDU session, a subscriber identifier like a user ID, and/or slice information used for the first PDU session. For example, the charging information may carry an identifier S-NSSAI of the first slice, or carry the S-NSSAI, DNN information, and the like.

602: The AMF sends a PDU session update request message carrying the identifiers of the first slice and the second slice to the SMF.

Correspondingly, the SMF receives the PDU session update request message, and determines that the slice replacement occurs for the first PDU session: the first slice is replaced with the second slice. A chargeable event may be triggered. In addition, the SMF determines that the PDU session is to be preserved, and establishes an N4 connection to a UPF.

603: The SMF determines that the PDU session is to be preserved, and triggers a corresponding chargeable event based on the slice replacement.

In this application, charging operations of the SMF are extended as follows: A new trigger function is extended or added, to trigger charging for an alternative slice. The trigger function (Trigger) may be set as follows: If the slice replacement occurs, the chargeable event corresponding to the slice replacement is triggered.

In another implementation, the trigger function (Trigger) may alternatively be set as follows: if slice recovery occurs, a chargeable event corresponding to the slice recovery is triggered, or another trigger function (Trigger) is used to trigger charging for the slice recovery.

Therefore, the SMF triggers, based on the setting of the trigger function, a corresponding chargeable event when determining that the slice replacement occurs.

In an implementation, the trigger function may be set to an immediate trigger (or referred to as an instant trigger) function or a deferred trigger function. If the trigger function is set to the immediate trigger function (Immediate trigger), when obtaining the PDU session update request message that is sent by the AMF and that carries information about the second slice, the SMF may determine that the slice replacement occurs, trigger the chargeable event, and immediately report the charging information to the CHF.

Alternatively, if the trigger function is set to the deferred trigger function (Deferred trigger), when obtaining the PDU session update request message that is sent by the AMF and that carries information about the second slice, the SMF determines that the slice replacement occurs, and defers reporting by default. To be specific, the SMF may close a current counter for counting slice charging, open a new counter to count charging information related to the alternative slice, and report charging information reported next time together with charging information corresponding to the current trigger event.

For example, the SMF may first close a first counter corresponding to the first slice and open a second counter to count charging information corresponding to the second slice. Therefore, when a next chargeable event occurs, the SMF reports charging information to the CHF. The charging information includes counted information corresponding to the first counter of the first slice and/or the counted information corresponding to the second counter of the second slice. That is, the counted information together with charging information corresponding to the next chargeable event are reported to the CHF.

Optionally, the immediate trigger or deferred trigger mode may be configured in a first apparatus, or may be changed by a second apparatus as needed. When the slice replacement and/or the slice recovery occur/occurs, enabling of a specific chargeable event may also be configured in the first apparatus, or may be enabled or disabled by the second apparatus as needed.

604: The SMF sends a first charging message to the CHF.

Specifically, the first charging message may be carried in a charging data update request message. The message sent by the SMF to the CHF may include the identifier of the first PDU session, the identifier of the first slice, and the identifier of the second slice, for example, the S-NSSAI #1 and the S-NSSAI #2, indicating to separately perform associated charging for the first slice and the second slice that correspond to the first PDU session, and include an associated charging parameter. In addition, the charging data update request message may further include used usage that is correspondingly generated by the first PDU session during slice running, for example, may include used usage corresponding to the first slice.

For example, as described in the foregoing step 603, a counted value of the first counter may indicate the used usage corresponding to the first slice.

Optionally, the message may further include quota request information for the second slice.

Correspondingly, the CHF receives the first charging message from the SMF, and determines, based on the identifier of the first PDU session, the identifier of the first slice, and the identifier of the second slice that are carried in the first charging message, that charging for usage of the first slice for the first PDU session and subsequent charging for usage of the second slice for the first PDU session are both associated with the first PDU session.

605: The CHF updates a CDR.

The CDR corresponding to the first PDU session includes the charging information corresponding to the first slice and the second slice. For example, the CHF updates the CDR, and adds the charging information corresponding to the S-NSSAI #1 and the S-NSSAI #2, so that a billing system can separately perform associated charging for the first slice and the second slice.

Optionally, the CHF may alternatively generate partial CDRs, to separately perform associated charging for the first slice and the second slice. Subsequently, a plurality of partial CDRs may be combined into one CDR corresponding to one session. For example, a partial CDR is generated for a first CDR corresponding to the first PDU session. The first CDR is used to record charging for usage of the first slice for the first PDU session, and the partial CDR is used to record charging for usage of the second slice for the first PDU session. Subsequently, the first CDR and the partial CDR may be combined as the CDR corresponding to the first PDU session.

606: The CHF sends a charging data update response message to the SMF.

For example, when associating charging information at a granularity of a PDU session, the CHF may use a PDU session identifier to count charging information of a PDU session corresponding to a user.

In addition, the charging information may alternatively be associated at a granularity of a slice. That is, charging for usage of different slices may be distinguished in the charging information. If the charging information is associated at a granularity of a tenant (tenant), associated charging may be performed for used usage of an original slice and used usage of an alternative slice.

In a possible implementation, if a slice corresponding to the first PDU session is recovered subsequently, that is, a serving slice is recovered from the second slice to the first slice, the SMF may trigger a corresponding chargeable event based on the slice recovery, and send a charging message to the CHF. The charging message carries the identifier of the first PDU session, the identifier of the second slice, and the identifier of the first slice, and indicates to separately perform associated charging for usage of the first slice and the second slice that correspond to the first PDU session. In this way, the CHF may update the CDR based on the charging message, and associate the charging for usage of the first slice corresponding to the first PDU session with the charging for usage of the second slice corresponding to the first PDU session.

For example, for charging of a terminal user, the billing system may associate, based on an identifier of the terminal user, the identifier of the first slice, and the identifier of the second slice in CDRs, all the charging CDRs corresponding to the first PDU session with charging of the same terminal user, so that charging is accurate.

As described above, for charging at a granularity of a tenant, for example, charging of a first slice tenant, it is assumed that the first slice tenant subscribes to the first slice but does not subscribe to the second slice. In an implementation process of the first PDU session, the first slice is switched to the second slice due to congestion, overload, unavailability, or the like of the first slice, and the second slice replaces the first slice to provide a service for the user. In this case, the billing system may determine charging corresponding to the first slice tenant, based on subscription information of the first slice tenant for the first slice, charging information of the first slice and the second slice that correspond to the first PDU session and/or a second PDU session within a time corresponding to the PDU sessions, and/or one or more correspondingly generated CDRs. That is, if charging is performed based on slice usage duration, it is assumed that duration within which the second slice replaces the first slice to provide the service is T1. In this case, the billing system needs to associate the charging information within the time period T1 of the second slice with the first slice tenant for charging. If charging is performed based on slice usage traffic, it is assumed that counted traffic of the second slice that replaces the first slice to provide the service is C. In this case, the billing system needs to associate charging information related to the traffic C corresponding to the second slice with the first slice tenant for charging.

In an implementation, charging of the first slice tenant is used as an example. The billing system (for example, including the CHF or another apparatus, and may further include Billing) may determine charging corresponding to the first slice tenant, based on the subscription information of the first slice tenant for the first slice, the charging information of the first slice and the second slice that correspond to the first PDU session, and/or the correspondingly generated CDRs. Optionally, the second apparatus may send the CDR corresponding to the first data connection session to the billing system, to determine charging of the terminal user, or determine charging corresponding to the first slice tenant, or the like.

In the foregoing embodiments, reporting of the charging message may further relate to quota management corresponding to the slice.

For charging management of the terminal user, the slice replacement or the slice recovery does not affect quota management. The SMF may detect a chargeable event based on a configured trigger function Trigger, and determine, based on the chargeable event, whether the quota management needs to be performed. If a quota granted by a network to a session is used up when the chargeable event is triggered, the charging data update request message sent by the SMF to the CHF in step 604 in the foregoing implementation process may carry quota request information and/or information corresponding to the trigger function Trigger that triggers a current quota request.

For charging management of the tenant (a slice user), the slice replacement or the slice recovery causes no impact. The billing system manages tenant accounts based on subscription information between an operator and the tenant. For example, the slice user (tenant) rents a slice provided by the operator, and may rent one network slice independently or a plurality of tenants rent one network slice. Based on the association relationship in embodiments of this application, used usage (carrying information about S-NSSAI and alternative S-NSSAI) during usage of the original slice and during usage of the alternative slice may be both associated with charging information of the tenant.

Tenant charging may involve a plurality of different billing system deployment modes. For example, CHFs are classified into a UE CHF and a tenant CHF. The SMF is connected to the UE CHF, and information about the tenant CHF is forwarded via the UE CHF. In another case, the SMF is directly connected to the UE CHF and the tenant CHF, to separately send charging information of the UE and the tenant and credit control on quota management. A deployment mode of the CHF is adaptive, and is not limited in the present invention.

### Embodiment 2

When this application is applied to a non-roaming scenario, slice replacement occurs: A first slice (with an identifier S-NSSAI #1) is updated to a second slice (with an identifier S-NSSSAI #2). An SMF determines a scenario in which a PDU session is released and re-established.

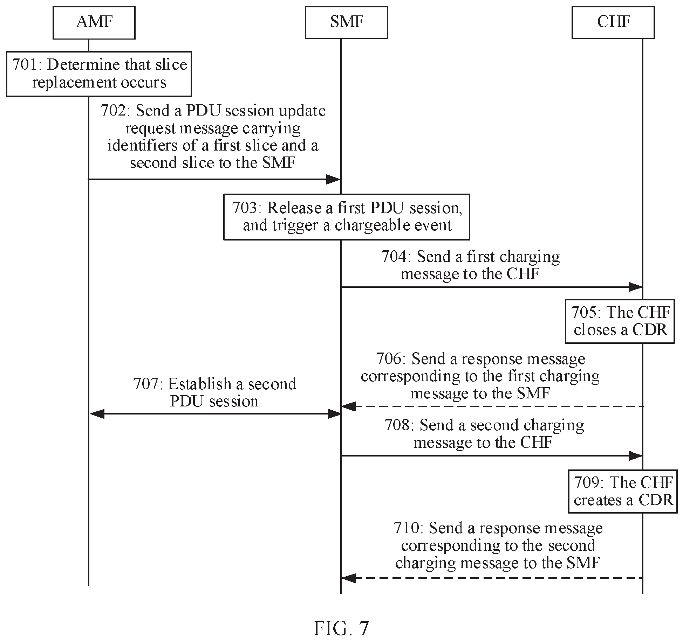

As shown in FIG. 7, the method includes the following steps.

701: An AMF determines that the slice replacement occurs.

Refer to the foregoing related step 401, 601, or 600.

702: The AMF sends a PDU session update request message carrying the identifiers of the first slice and the second slice to the SMF.

Correspondingly, the SMF receives the PDU session update request message, and determines that the slice replacement occurs for a PDU session: the first slice is replaced with the second slice.

703: The SMF releases a first PDU session, and triggers a chargeable event.

The SMF determines that the PDU session needs to be updated, and releases the first PDU session. A slice corresponding to the first PDU session is updated from the first slice to the second slice. It is determined that the PDU session is released. Based on the chargeable event, it is determined that a trigger event corresponding to the release of the first PDU session is met (for example, it is determined that a setting of a PDU Session Release Trigger is met), that is, the chargeable event is triggered, and a charging message is reported.

704: The SMF sends a first charging message to a CHF.

For example, the first charging message may be carried in a charging data release request message. The first charging message sent by the SMF to the CHF may include an identifier of the first PDU session, the identifier of the first slice, and the identifier of the second slice, for example, the S-NSSAI #1 and the S-NSSAI #2, indicating to separately perform associated charging for the first slice and the second slice. In addition, the first charging message may further include a related charging parameter, for example, include used usage correspondingly generated by the first PDU session during slice running, for example, may include used usage corresponding to the first slice.

Correspondingly, the CHF receives the first charging message from the SMF, and determines, based on the identifier of the first PDU session, the identifier of the first slice, and the identifier of the second slice that are carried in the first charging message, that charging for usage of the first slice for the first PDU session and charging for usage of the second slice for an established session are both associated with a terminal user corresponding to the first PDU session.

705: The CHF closes a CDR.

The CHF closes a first CDR corresponding to the first PDU session based on the received first charging message. The first CDR includes charging information corresponding to the first PDU session, and an association relationship between the first slice and the second slice is added. The charging information corresponding to the first slice is associated with charging information of the second slice. Because the first CDR corresponds to a first terminal user, the first terminal user corresponds to the first PDU session, and the first CDR corresponding to the first PDU session is associated with the charging information of the first slice and the second slice. That is, the first CDR is associated with the charging information of the first slice and the second slice.

Optionally, step 706 may be further performed.

706: The CHF sends a response message corresponding to the first charging message to the SMF.

Correspondingly, if the first charging message is a charging data release request message, the CHF may send a charging data release response message to the SMF, namely, a response message corresponding to the first charging message in step 704, to indicate that release of charging data is completed.

707: Establish a second PDU session.

After the SMF releases the first PDU session, the SMF receives a second PDU session establishment request. A slice corresponding to the second PDU session is the second slice. The establishment of the second PDU session is caused by the slice replacement or slice recovery.

Optionally, whether the first PDU session is released and the second PDU session is re-established by a same SMF or by different SMFs depends on a slice usage basis and a slice deployment mode. For example, a same SMF is deployed for a plurality of network slices in a network, or an SMF is independently deployed for each network slice in the network. For example, the first slice corresponds to an SMF-1, and the second slice corresponds to an SMF-2. The slice deployment mode is not limited in this application.

708: The SMF sends a second charging message to the CHF.

The SMF receives the second PDU session establishment request. Because the slice corresponding to the first PDU session is updated from the first slice to the second slice, the SMF determines that the PDU session is established. The SMF determines, based on the chargeable event, that a trigger event corresponding to the establishment of the second PDU session is met (for example, determines that a setting of PDU Session Establishment Trigger is met), that is, the chargeable event is triggered, and reports the charging message.

For example, the second charging message may be carried in an initial charging request message.

The second charging message may include the identifier of the first PDU session, an identifier of the second PDU session, the identifier of the first slice, and the identifier of the second slice, for example, the S-NSSAI #1 and the S-NSSAI #2, indicating to separately perform associated charging for the first slice and the second slice. Optionally, the second charging message may further include a requested quota.

Correspondingly, the CHF receives the second charging message from the SMF, determines, based on the identifier of the first PDU session, the identifier of the second PDU session, the identifier of the first slice, and the identifier of the second slice that are carried in the second charging message, that the PDU session is re-established, associates charging for the first slice and the second slice with the first PDU session, and associates the charging for the first slice and the second slice with the second PDU session, that is, associates the slices before and after the update with different PDU sessions for charging.

709: The CHF creates a CDR.

A second CDR corresponding to the second PDU session is created. The second CDR includes the charging information corresponding to the first slice and/or the second slice, and the charging information corresponding to the first slice is associated with the charging information of the second slice.

It should be noted that, in the foregoing implementations, an execution sequence of steps 703 to 706 and steps 707 to 710 is not limited in this application. In the foregoing embodiments, an example in which the SMF first releases and then establishes the PDU session is used. Alternatively, the SMF may first establish and then release the PDU session. This is not limited in this application.

Optionally, the following steps may be further included.

710: The CHF sends a response message corresponding to the second charging message to the SMF.

Correspondingly, if the second charging message is a charging data release request message, the CHF may send a charging data release response message to the SMF, namely, a response message corresponding to the second charging message in step 707, to indicate that an update to the charging data is completed.

For example, subsequently, the billing system may associate, based on an identifier of the first terminal user in the first CDR, for example, the identifier of the first slice and the identifier of the second slice, a charging CDR corresponding to the first slice corresponding to the first PDU session with the second CDR corresponding to the second PDU that is established due to the slice update or the slice recovery. That is, charging for usage of the slices before and after the slice update is associated with charging for usage of slices by the first terminal user, so that charging is accurate.

In a possible implementation, if subsequently receiving a second PDU session update request message, the SMF determines that slice recovery occurs for the second PDU session, and the serving slice is recovered from the second slice to the first slice. The second PDU session is released, and a third PDU session is established. The SMF may send, to the CHF, a charging message carrying the identifier of the second PDU session, an identifier of the third PDU session, the identifier of the second slice, and the identifier of the first slice, indicating to perform associated charging for usage of the second slice corresponding to the second PDU session and the first slice corresponding to the third PDU session. In this way, the CHF may determine, based on the charging message, to re-establish the PDU session, close the second CDR corresponding to the second PDU session, and create a third CDR corresponding to the third PDU session. The third CDR includes the charging information of the second slice and the charging information of the first slice, and is used to associate the charging for usage of the second slice corresponding to the second PDU session and the charging for usage of the first slice corresponding to the third PDU session with charging of a same terminal user.

For example, for charging of the terminal user, the billing system may associate, based on an identifier of the terminal user, the identifier of the first slice, and the identifier of the second slice in the CDRs, both the second CDR corresponding to the second PDU session and the third CDR corresponding to the third PDU session with the charging of the same terminal user, so that charging is accurate.

Alternatively, for charging of a slice tenant, the billing system may associate, based on the identifier of the first slice and the identifier of the second slice in the second CDR and the third CDR, the second CDR corresponding to the second slice corresponding to the second PDU session with the third CDR of the first slice corresponding to a third PDU session that is established due to the slice recovery, that is, associate the second CDR and the third CDR with charging of a same slice tenant, for example, a first tenant. In other words, the billing system associates, with charging for usage by the first tenant, charging that is for usage of the second slice by the user and that is generated in a process in which the second slice provides a service because the first slice is replaced due to congestion of the first slice when the first tenant rents and uses the first slice. In this way, charging is accurate.

In another possible implementation, the AMF may determine that the PDU session is re-established and released, and report slice identifiers before and after the update, for example, the identifier of the first slice and the identifier of the second slice, to the SMF. In this case, the SMF may add the identifier of the first slice and the identifier of the second slice to the charging information reported to the CHF, to perform associated charging for the release of the first PDU session and the re-establishment of the second PDU session that are caused by the slice replacement or recovery.

### Embodiment 3

When this application is applied to a roaming scenario, slice replacement occurs: A first slice (with an identifier S-NSSAI #1) is updated to a second slice (with an identifier S-NSSSAI #2). For example, an H-PLMN senses the slice replacement, and notifies a visited network element V-AMF to implement charging reporting of the slice replacement.

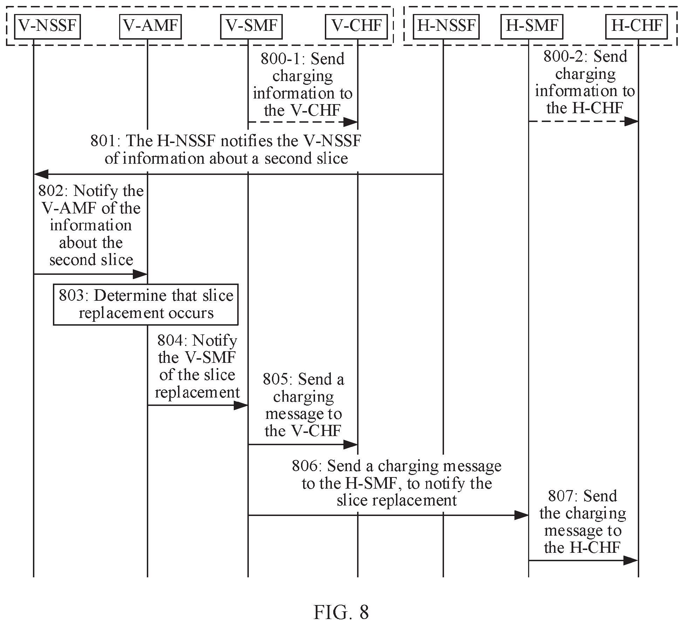

As shown in FIG. 8, in the following embodiment, an HR roaming mode is used as an example to describe an implementation method of this application. The method includes the following steps.

801: An H-NSSF notifies a V-NSSF of information about the second slice.

When a slice status of the H-PLMN is unavailable or congested, the NSSF in the H-PLMN may send a notification message to the NSSF in the V-PLMN, to provide information about an alternative slice, for example, the S-NSSAI #2.

Before step 801, a terminal has established a PDU session, and a charging session between a corresponding SMF and a CHF has also been established. The following steps are further included.

800-1: A V-SMF sends charging information to a V-CHF.

The charging information reported by the V-SMF to the V-CHF may include an identifier of the PDU session, a subscriber identifier like a user ID, and/or slice information (such as S-NSSAI and DNN information) used for the PDU session. In the roaming scenario, used slices include a visited slice and a home slice. For example, the charging information may carry an identifier of a slice of a home operator, for example, H-S-NSSAI #1, and/or an identifier of a slice of a visited operator, for example, V-S-NSSAI #1.

800-2: An H-SMF sends charging information to an H-CHF.

Similar to step 800-1, the charging information reported by the H-SMF to the H-CHF may include the identifier of the PDU session, the subscriber identifier like the user ID, and/or the slice information used for the PDU session. In the roaming scenario, the used slices include the visited slice and the home slice. For example, the charging information may carry the identifier of the slice of the home operator, for example, the H-S-NSSAI #1, and/or the identifier of the slice of the visited operator, for example, V-S-NSSAI #3.

802: The V-NSSF notifies the V-AMF of the information about the second slice.

Specifically, after receiving the notification message from the NSSF in the H-PLMN, the NSSF in the V-PLMN notifies the AMF of the information about the alternative slice, for example, the S-NSSAI #2.

803: The V-AMF determines that the slice replacement occurs.

Specifically, when the V-AMF determines that a slice of the H-PLMN is replaced or recovered, for example, the H-S-NSSAI #1 is updated to H-S-NSSAI #2, the V-AMF may provide a user with a mapping relationship between an original slice corresponding to the H-PLMN and an alternative slice, for example, notify the user of a mapping relationship between the H-S-NSSAI #1 and the H-S-NSSAI #2.

Optionally, if a slice status corresponding to the V-PLMN is unavailable or congested, the NSSF in the V-PLMN may provide the V-AMF with information about an alternative slice of the V-PLMN. When the V-AMF determines that an original slice corresponding to the V-PLMN is replaced or recovered, for example, V-S-NSSAI #3 is updated to V-S-NSSAI #4, the V-AMF may provide the user with a mapping relationship between the original slice corresponding to the V-PLMN and the alternative slice, for example, notify the user of a mapping relationship between the V-S-NSSAI #3 and the V-S-NSSAI #4.

804: The V-AMF notifies the V-SMF of the slice replacement.

Specifically, the V-AMF may send updated slice information of the home operator and/or updated slice information of the visited operator to the V-SMF.

805: The V-SMF sends a charging message to the V-CHF.

The V-SMF triggers a chargeable event corresponding to the slice replacement based on a configured trigger function corresponding to the slice replacement. The V-SMF sends an update message of a charging data request message to the V-CHF. The message includes the identifier of the PDU session, the S-NSSAI of the H-PLMN, the alternative S-NSSAI of the H-PLMN, the S-NSSAI of the V-PLMN, and the alternative S-NSSAI of the V-PLMN.

806: The V-SMF sends a charging message to the H-SMF, to notify the slice replacement.

The charging message is the foregoing third charging message, and indicates that the visited slice corresponding to the first PDU session is updated from the first slice to the second slice. The charging message includes the identifier of the first slice, the identifier of the second slice, and a related charging parameter.

Optionally, if the home slice corresponding to the first PDU session is updated from a third slice to a fourth slice, the third charging message may further include an identifier of the third slice and an identifier of the fourth slice.

For example, when the original slice corresponding to the V-PLMN is replaced or recovered, for example, the V-S-NSSAI #3 is updated to the V-S-NSSAI #4, the V-SMF may provide the H-SMF with the mapping relationship between the original slice corresponding to the V-PLMN and the alternative slice, for example, the mapping relationship between the V-S-NSSAI #3 and the V-S-NSSAI #4. If the original slice corresponding to the H-PLMN is replaced or recovered, for example, the H-S-NSSAI #1 is updated to the H-S-NSSAI #, the V-SMF may provide the H-SMF with the mapping relationship between the original slice corresponding to the H-PLMN and the alternative slice, for example, notify the user of the mapping relationship between the H-S-NSSAI #1 and the H-S-NSSAI #2.

807: The H-SMF sends the charging message to the H-CHF.

Specifically, after receiving the charging message from the V-SMF, the H-SMF may report the update message of the charging data request message to the H-CHF.

Correspondingly, after receiving the charging messages, the H-CHF and the V-CHF may operate CDRs based on the charging messages. For a specific process of operating the CDR by the CHF, refer to Embodiment 1 and Embodiment 2. Details are not described herein again.

It should be noted that, in the foregoing embodiment, an example in which the slice of the home operator is replaced is used. Therefore, the H-NSSF notifies the V-NSSF of the information about the second slice, after the update, of the home operator. If the slice of the visited operator is replaced, or both the visited slice and the home slice are replaced, the following may be further included: The V-NSSF notifies the H-NSSF of the information about the slice, after the update, of the visited operator. Details are not described in this application.

In an implementation, for an LBO roaming mode, with reference to the LBO roaming architecture shown in FIG. 2, after the V-SMF may determine that slice replacement or slice recovery occurs, the V-SMF may report charging messages to the V-CHF and the H-CHF.

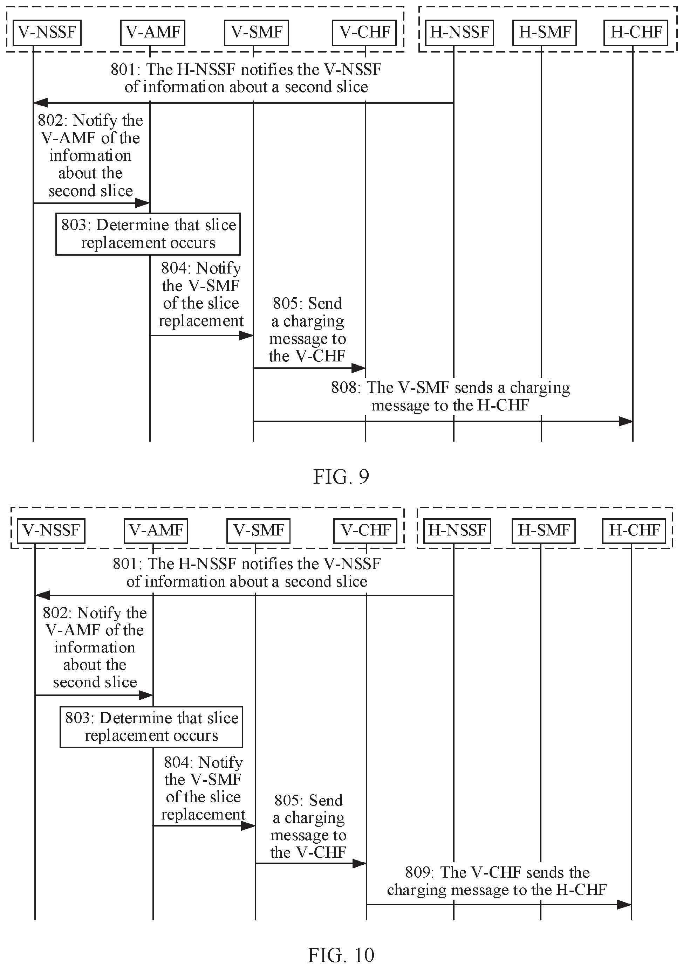

Optionally, for the LBO roaming mode, an interaction procedure of reporting the charging message when the slice replacement or the slice recovery occurs may be shown in FIG. 9. For steps 801 to 805, refer to the related descriptions shown in FIG. 8. The method may further include the following step.

808: The V-SMF sends a charging message to the H-CHF.

Correspondingly, the charging message sent by the V-AMF to the H-CHF corresponds to the fourth charging message in the claims. To be specific, the V-AMF sends the fourth charging message to the H-CHF. The fourth charging message includes the identifier of the first slice, the identifier of the second slice, and an identifier of a third slice, is used to perform associated charging for usage of the first slice and/or the second slice, and may further include a related charging parameter.

In a possible embodiment, the fourth charging message may further include an identifier of a fourth slice, indicating that the home slice corresponding to the first PDU session is updated from the third slice to the fourth slice. The first charging message or the fourth charging message is used to perform associated charging for usage of the third slice and/or the fourth slice.

Optionally, for another LBO roaming mode, an interaction procedure of reporting a charging message when slice replacement or slice recovery occurs may be shown in FIG. 10. For steps 801 to 805, refer to the related descriptions shown in FIG. 8. The method may further include the following step.

809: The V-CHF sends the charging message to the H-CHF.

Correspondingly, the charging message sent by the V-CHF to the H-CHF corresponds to the fifth charging message in the claims. To be specific, the V-CHF sends the fifth charging message to the H-CHF. The fifth charging message includes the identifier of the first slice and the identifier of the second slice, is used to perform associated charging for usage of the first slice and/or the second slice, and may further include a related charging parameter.

It should be noted that, in the foregoing embodiment, the slice replacement is used as an example to describe an implementation associated with charging management. For a slice recovery scenario, an implementation process is similar. For example, slice recovery includes updating the serving slice from an alternative slice to an original slice. That is, in the foregoing embodiment, the first slice may be the alternative slice, and the second slice may be the original slice.

Embodiments mentioned above in this application may be combined when the solutions do not conflict. This is not limited.

The foregoing mainly describes, from a perspective of interaction between network elements, the solutions provided in this application. Correspondingly, this application further provides a communication apparatus. The communication apparatus may be the first apparatus in the foregoing method embodiments, or a node or device including the second apparatus, or a part that can be used in the first apparatus. Alternatively, the communication apparatus may be the second apparatus in the foregoing method embodiment, or a node or device including the second apparatus, or a part that can be used in the second apparatus. Further, the communication apparatus may be the third apparatus in the foregoing method embodiment, or a node or device including the third apparatus, or a part that can be used in the third apparatus.

It may be understood that, the communication apparatus includes a corresponding hardware structure and/or software module for performing each function to implement the foregoing functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that only the first apparatus, the second apparatus, or the third apparatus are used as examples above to describe interaction between the network elements. Actually, processing performed by the foregoing terminal is not limited to being performed by only a single network element, and processing performed by the foregoing network device is not limited to being performed by only a single network element.

In this application, functional modules of the communication apparatus may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It may be understood that, in this application, module division is an example, and is merely logical function division. During actual implementation, there may be another division manner.

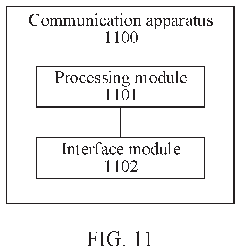

For example, when each functional module is obtained through division in an integrated manner, FIG. 11 is a diagram of a structure of a communication apparatus 1100. The communication apparatus 1100 includes a processing module 1101 and an interface module 1102.

In some embodiments, the communication apparatus 1100 may further include a storage module (which is not shown in FIG. 11), configured to store program instructions and data.

For example, the communication apparatus 1100 may be configured to implement a function of the first apparatus. The communication apparatus 1100 is, for example, the first apparatus or the SMF in the foregoing embodiments.

The processing module 1101 is configured to determine that a slice corresponding to a first data connection session is updated from a first slice to a second slice.

The interface module 1102 is configured to send a first charging message to a second apparatus. The first charging message includes an identifier of the first slice, an identifier of the second slice, and a related charging parameter, and is used to perform associated charging for usage of the first slice and/or the second slice.

In an implementation, the processing module 1101 is configured to determine, based on the slice corresponding to the first data connection session being updated from the first slice to the second slice, that a trigger event corresponding to slice replacement is met, and the interface module 1102 is configured to send the first charging message to the second apparatus; or the processing module 1101 is configured to determine, based on the slice corresponding to the first data connection session being updated from the first slice to the second slice, that a trigger event corresponding to slice recovery is met, and the interface module 1102 is configured to send the first charging message to the second apparatus.

In an implementation, the processing module 1101 is configured to determine, based on the slice corresponding to the first data connection session being updated from the first slice to the second slice, that a trigger event corresponding to release of the first data connection session is met, and the interface module 1102 is configured to send the first charging message to the second apparatus.

In an implementation, the processing module 1101 is configured to determine, based on the slice corresponding to the first data connection session being updated from the first slice to the second slice, that a trigger event corresponding to establishment of a second data connection session is met, and the interface module 1102 is configured to send a second charging message to the second apparatus. The second charging message includes the identifier of the first slice, the identifier of the second slice, and a related charging parameter, and is used to perform associated charging for usage of the first slice and/or the second slice.

In an implementation, the first charging message includes quota usage information corresponding to the first slice and/or quota request information corresponding to the second slice.

In an implementation, the processing module 1101 is configured to: close a first counter corresponding to counted used usage of the first slice, and open a second counter corresponding to counted used usage of the second slice. When a next chargeable event occurs, the interface module 1102 is configured to send the first charging message to the second apparatus. The first charging message includes counted information of the first counter and/or counted information of the second counter.

In an implementation, the interface module 1102 is further configured to send a third charging message to a session management function SMF corresponding to a home operator, to indicate that a visited slice corresponding to the first data connection session is updated from the first slice to the second slice. The third charging message includes the identifier of the first slice, the identifier of the second slice, and a related charging parameter.

In an implementation, if the first apparatus is a session management function SMF of a visited operator, the interface module 1102 is configured to send the first charging message to a charging function of the visited operator; or if the first apparatus is the session management function SMF of the home operator, the interface module 1102 is configured to send the first charging message to a charging function corresponding to the home operator, to support updating the slice corresponding to the first data connection session from the first slice to the second slice. The first charging message includes the identifier of the first slice, the identifier of the second slice, and/or an identifier of a third slice. The third slice is a network slice of the home operator.

In an implementation, if the first apparatus is the SMF of the visited operator, the interface module 1102 is further configured to send a fourth charging message to the charging function corresponding to the home operator. The fourth charging message includes the identifier of the first slice, the identifier of the second slice, the identifier of the third slice, and a related charging parameter, is used to perform associated charging for usage of the first slice and/or the second slice, and includes mapping between the first and second slices and the third slice.

In an implementation, the first charging message or the fourth charging message further includes an identifier of a fourth slice, indicating that a home slice corresponding to the first data connection session is updated from the third slice to the fourth slice. The first charging message or the fourth charging message is used to perform associated charging for usage of the third slice and/or the fourth slice, and includes mapping between the first and second slices and the third and fourth slices.

In an implementation, the identifier of the first slice and the identifier of the second slice are carried in at least one of the following information: protocol data unit PDU session charging information; or a network slice identifier, an alternative network slice identifier, a used unit container UUC field, or network slice mapping information in the PDU session charging information.

In an implementation, the first charging message includes first indication information, indicating that slice replacement or slice recovery occurs for the first data connection session.

In an implementation, a slice identifier includes single network slice selection assistance information S-NSSAI and/or an identifier of a network slice instance NSI.

In addition, the communication apparatus 1100 may alternatively be configured to implement, for example, the steps performed by the second apparatus or the CHF in the foregoing embodiments.

The interface module 1102 is configured to receive a first charging message from a first apparatus. The first charging message includes an identifier of a first slice, an identifier of a second slice, and a related charging parameter, and is used to perform associated charging for usage of the first slice and/or the second slice that correspond/corresponds to a first data connection session.

The processing module 1101 is configured to operate, based on the first charging message, a charging data record CDR corresponding to the first data connection session. The CDR includes charging information corresponding to the first slice and/or charging information corresponding to the second slice.

In an implementation, the first charging message includes quota usage information corresponding to the first slice and/or quota request information corresponding to the second slice.

In an implementation, quota management corresponding to the first slice is identified by using the first slice, and quota management corresponding to the second slice is identified by using the first slice.

In an implementation, the processing module 1101 is configured to update a first CDR corresponding to the first data connection session. The first CDR includes the charging information corresponding to the first slice and/or the charging information corresponding to the second slice.

In an implementation, the processing module 1101 is configured to: close a first CDR corresponding to the first data connection session, where the first CDR includes the charging information corresponding to the first slice; and create a second CDR corresponding to a second data connection session, where the second CDR includes the charging information corresponding to the second slice.

In an implementation, the first apparatus is a session management function SMF that is of a visited operator of a user and that corresponds to the first data connection session.

In an implementation, if the second apparatus is a charging function of a home operator, the interface module 1102 is configured to receive the first charging message from a session management function SMF corresponding to the home operator; or if the second apparatus is a charging function of the visited operator, the interface module 1102 is configured to receive the first charging message from the session management function SMF corresponding to the visited operator. The first charging message includes the identifier of the first slice, the identifier of the second slice, and an identifier of a third slice, and is used to perform associated charging for usage of the first slice and/or the second slice. The third slice is a network slice of the home operator. The first charging message further includes mapping between the first and second slices and the third slice.

In an implementation, if the second apparatus is the charging function of the home operator, the interface module 1102 is configured to receive a fourth charging message from the session management function SMF corresponding to the visited operator. The fourth charging message includes the identifier of the first slice, the identifier of the second slice, the identifier of the third slice, and a related charging parameter, and is used to perform associated charging for usage of the first slice and/or the second slice.

In an implementation, the first charging message further includes an identifier of a fourth slice, indicating that a home slice corresponding to the first data connection session is updated from the third slice to the fourth slice, and is used to perform associated charging for usage of the third slice and/or the fourth slice. The first charging message further includes mapping between the first and second slices and the third and fourth slices.

In an implementation, the interface module 1102 is configured to send a fifth charging message to the charging function CHF corresponding to the home operator. The fifth charging message includes the identifier of the first slice, the identifier of the second slice, and a related charging parameter, and is used to perform associated charging for usage of the first slice and/or the second slice.

In an implementation, the identifier of the first slice and the identifier of the second slice are carried in at least one of the following information: PDU session charging information; or a network slice identifier, an alternative network slice identifier, a used unit container UUC field, or network slice mapping information in the PDU session charging information.

In an implementation, the first charging message includes first indication information, indicating that slice replacement or slice recovery occurs for the first data connection session.

In an implementation, a slice identifier includes single network slice selection assistance information S-NSSAI and/or an identifier of a network slice instance NSI.

In an implementation, the processing module 1101 is further configured to determine, based on subscription information of a first slice tenant for the first slice, the charging information of the first slice and the second slice that correspond to the first data connection session, and/or a correspondingly generated CDR, charging corresponding to the first slice tenant.

In addition, the communication apparatus 1100 may alternatively be configured to implement, for example, the steps performed by the third apparatus or the AMF in the foregoing embodiments.

The processing module 1101 is configured to determine that a slice corresponding to a first user is updated from a first slice to a second slice.

The interface module 1102 is configured to send a sixth charging message to a second apparatus. The sixth charging message includes an identifier of the first slice, an identifier of the second slice, and a related charging parameter, and is used to perform associated charging for the first slice and/or the second slice.

In an implementation, the processing module 1101 is configured to determine, based on the slice corresponding to the first user being updated from the first slice to the second slice, that the first user meets a trigger event corresponding to registration management, and the interface module 1102 is configured to send the sixth charging message to the second apparatus; or the processing module 1101 is configured to determine, based on the slice corresponding to the first user being updated from the first slice to the second slice, that the first user meets a trigger event corresponding to connection management, and the interface module 1102 is configured to send the sixth charging message to the second apparatus; or the processing module 1101 is configured to determine, based on the slice corresponding to the first user being updated from the first slice to the second slice, that the first user meets a trigger event corresponding to a location update, and the interface module 1102 is configured to send the sixth charging message to the second apparatus.

In an implementation, the first apparatus is an access and mobility management function AMF corresponding to a visited operator of the first user, and the second apparatus is configured to provide a charging function CHF for the visited operator.

In an implementation, the interface module 1102 is further configured to send a charging message to a charging function CHF corresponding to a home operator of the first user. The charging message includes the identifier of the first slice, the identifier of the second slice, and a related charging parameter, and is used to perform associated charging for the first slice and/or the second slice.

In an implementation, a slice identifier includes single network slice selection assistance information S-NSSAI and/or an identifier of a network slice instance NSI.

In an implementation, the sixth charging message includes second indication information, indicating that the slice corresponding to the first user is replaced or recovered.

When the communication apparatus 1100 is configured to implement functions of the first apparatus, the second apparatus, the third apparatus, the SMF, the AMF, the CHF, or the like in the foregoing embodiments, for another function that can be implemented by the communication apparatus 1100, refer to the related descriptions in the embodiments shown in FIG. 4 to FIG. 8. Details are not described again.

In a simple embodiment, a person skilled in the art may figure out that the communication apparatus 1100 may be in the form shown in FIG. 3. For example, the processor 301 in FIG. 3 may invoke the computer-executable instructions stored in the memory 303, to cause the communication apparatus 1100 to perform the method in the foregoing method embodiments.

For example, a function/an implementation process of the processing module 1101 in FIG. 11 may be implemented by the processor 301 in FIG. 3.

For example, a function/an implementation process of the interface module 1102 in FIG. 11 may be implemented by the communication interface 304 in FIG. 3.

It may be understood that one or more of the foregoing modules or units may be implemented by using software, hardware, or a combination thereof. When any one of the foregoing modules or units is implemented by using the software, the software exists in a form of computer program instructions, and is stored in the memory. The processor may be configured to: execute the program instructions, and implement the foregoing method procedure. The processor may be built into a SoC (system-on-a-chip) or an ASIC, or may be an independent semiconductor chip. In addition to the core configured to perform calculation or processing by executing software instructions, the processor may further include a necessary hardware accelerator, for example, a field programmable gate array (field programmable gate array, FPGA), a PLD (programmable logic device), or a logical circuit that implements a dedicated logical operation.

When the foregoing modules or units are implemented by using the hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes a memory. Optionally, the chip system may include a chip, or may include the chip and another discrete device. This is not specifically limited in this application.

Optionally, this application further provides a computer-readable storage medium. All or a part of procedures in the foregoing method embodiments may be completed by a computer program instructing related hardware. The program may be stored in the foregoing computer-readable storage medium. When the program is executed, the procedures of the foregoing method embodiments may be included. The computer-readable storage medium may be an internal storage unit of the communication apparatus according to any one of the foregoing embodiments, for example, a hard disk drive or an internal memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are needed by the communication apparatus. The computer-readable storage medium may be further configured to temporarily store data that has been output or is to be output.

Optionally, this application further provides a computer program product. All or a part of the procedures in the foregoing method embodiments may be completed by a computer program instructing related hardware. The program may be stored in the computer program product. When the program is executed, the procedures of the foregoing method embodiments may be included.

Optionally, this application further provides computer instructions. All or a part of the procedures in the foregoing method embodiments may be completed by the computer instructions instructing related hardware (for example, a computer, a processor, a network device, or a terminal). The program may be stored in the computer-readable storage medium or the computer program product.

Optionally, this application further provides a communication system, including the first apparatus and the second apparatus in the foregoing embodiments.

Optionally, this application further provides a communication system, including the third apparatus and the second apparatus in the foregoing embodiments.

Optionally, this application further provides a communication system, including the first apparatus, the second apparatus, and the third apparatus in the foregoing embodiments.

Based on the foregoing descriptions of the implementations, a person skilled in the art may clearly understand that, for the purpose of convenient and brief description, the foregoing functional module division is taken as an example for illustration. During actual application, the foregoing functions can be allocated to different functional modules and implemented based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and the parts displayed as units may be one or more physical units, may be located in one place, or may be distributed on a plurality of different places. A part or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a first apparatus, wherein the method comprises:
determining that a slice corresponding to a first data connection session is updated from a first slice to a second slice; and
sending a first charging message to a second apparatus, wherein the first charging message comprises an identifier of the first slice, an identifier of the second slice, and a related charging parameter, and the first charging message is used to perform associated charging for usage of the first slice and/or the second slice.

2. The method according to claim 1, wherein the sending the first charging message to the second apparatus comprises:
determining, based on the slice corresponding to the first data connection session being updated from the first slice to the second slice, that a trigger event corresponding to slice replacement is met, and sending the first charging message to the second apparatus; or
determining, based on the slice corresponding to the first data connection session being updated from the first slice to the second slice, that a trigger event corresponding to slice recovery is met, and sending the first charging message to the second apparatus.

3. The method according to claim 1, wherein the sending the first charging message to the second apparatus comprises:
determining, based on the slice corresponding to the first data connection session being updated from the first slice to the second slice, that a trigger event corresponding to release of the first data connection session is met, and sending the first charging message to the second apparatus.

4. The method according to claim 1 or 3, wherein the method further comprises:
determining, based on the slice corresponding to the first data connection session being updated from the first slice to the second slice, that a trigger event corresponding to establishment of a second data connection session is met, and sending a second charging message to the second apparatus, wherein the second charging message comprises the identifier of the first slice, the identifier of the second slice, and a related charging parameter, and is used to perform associated charging for usage of the first slice and/or the second slice.

5. The method according to any one of claims 1 to 4, wherein the first charging message comprises quota usage information corresponding to the first slice and/or quota request information corresponding to the second slice.

6. The method according to any one of claims 1 to 5, wherein before the sending the first charging message to the second apparatus, the method further comprises:
closing a first counter corresponding to counted used usage of the first slice, and opening a second counter corresponding to counted used usage of the second slice; and
the sending the first charging message to the second apparatus comprises:
sending the first charging message to the second apparatus when a next chargeable event occurs, wherein the first charging message comprises counted information of the first counter and/or counted information of the second counter.

7. The method according to any one of claims 1 to 6, wherein the method further comprises:
sending a third charging message to a session management function SMF corresponding to a home operator, to indicate that a visited slice corresponding to the first data connection session is updated from the first slice to the second slice, wherein the third charging message comprises the identifier of the first slice, the identifier of the second slice, and a related charging parameter.

8. The method according to any one of claims 1 to 7, wherein the sending the first charging message to the second apparatus comprises:
if the first apparatus is a session management function SMF of a visited operator, sending the first charging message to a charging function of the visited operator; or
if the first apparatus is a session management function SMF of the home operator, sending the first charging message to a charging function corresponding to the home operator, to support updating of the slice corresponding to the first data connection session from the first slice to the second slice, wherein the first charging message comprises the identifier of the first slice, the identifier of the second slice, and/or an identifier of a third slice, and the third slice is a network slice of the home operator.

9. The method according to claim 8, wherein if the first apparatus is the SMF of the visited operator, the method further comprises:
sending a fourth charging message to the charging function corresponding to the home operator, wherein the fourth charging message comprises the identifier of the first slice, the identifier of the second slice, the identifier of the third slice, and a related charging parameter, and is used to perform associated charging for usage of the first slice and/or the second slice.

10. The method according to claim 8 or 9, wherein the first charging message or the fourth charging message further comprises an identifier of a fourth slice, indicating that a home slice corresponding to the first data connection session is updated from the third slice to the fourth slice, and the first charging message or the fourth charging message is used to perform associated charging for usage of the third slice and/or the fourth slice.

11. The method according to any one of claims 1 to 10, wherein the identifier of the first slice and the identifier of the second slice are carried in at least one of the following information:
protocol data unit PDU session charging information; or
a network slice identifier, an alternative network slice identifier, a used unit container UUC field, or network slice mapping information in the PDU session charging information.

12. The method according to any one of claims 1 to 11, wherein the first charging message comprises first indication information, indicating that the slice replacement or the slice recovery occurs for the first data connection session.

13. The method according to any one of claims 1 to 12, wherein the slice identifier comprises single network slice selection assistance information S-NSSAI and/or an identifier of a network slice instance NSI.

14. A communication method, applied to a second apparatus, wherein the method comprises:
receiving a first charging message from a first apparatus, wherein the first charging message comprises an identifier of a first slice, an identifier of a second slice, and a related charging parameter, and the first charging message is used to perform associated charging for usage of the first slice and/or the second slice that correspond/corresponds to a first data connection session; and
operating, based on the first charging message, a charging data record CDR corresponding to the first data connection session, wherein the CDR comprises charging information corresponding to the first slice and/or charging information corresponding to the second slice.

15. The method according to claim 14, wherein the first charging message comprises quota usage information corresponding to the first slice and/or quota request information corresponding to the second slice.

16. The method according to claim 15, wherein the identifier of the first slice is used for the quota usage information corresponding to the first slice, and the identifier of the first slice is used for the quota request information corresponding to the second slice.

17. The method according to any one of claims 14 to 16, wherein the operating the CDR comprises:
updating a first CDR corresponding to the first data connection session, wherein the first CDR comprises the charging information corresponding to the first slice and the charging information corresponding to the second slice.

18. The method according to any one of claims 14 to 16, wherein the operating the CDR comprises:
closing a first CDR corresponding to the first data connection session, wherein the first CDR comprises the charging information corresponding to the first slice; and
creating a second CDR corresponding to a second data connection session, wherein the second CDR comprises the charging information corresponding to the second slice.

19. The method according to any one of claims 14 to 17, wherein the first apparatus is a session management function SMF that is of a visited operator of a user and that corresponds to the first data connection session.

20. The method according to any one of claims 14 to 19, wherein the receiving the first charging message from the first apparatus comprises:
if the second apparatus is a charging function of a home operator, receiving the first charging message from a session management function SMF corresponding to the home operator; or
if the second apparatus is a charging function of the visited operator, receiving the first charging message from the session management function SMF corresponding to the visited operator, wherein the first charging message comprises the identifier of the first slice, the identifier of the second slice, and an identifier of a third slice, and is used to perform associated charging for usage of the first slice and/or the second slice, and the third slice is a network slice of a home operator.

21. The method according to claim 20, wherein if the second apparatus is the charging function of the home operator, the method further comprises:
receiving a fourth charging message from the session management function SMF corresponding to the visited operator, wherein the fourth charging message comprises the identifier of the first slice, the identifier of the second slice, the identifier of the third slice, and a related charging parameter, and is used to perform associated charging for usage of the first slice and/or the second slice.

22. The method according to claim 21, wherein the first charging message further comprises an identifier of a fourth slice, indicating that a home slice corresponding to the first data connection session is updated from the third slice to the fourth slice, and is used to perform associated charging for usage of the third slice and/or the fourth slice.

23. The method according to any one of claims 14 to 22, wherein the method further comprises:
sending a fifth charging message to the charging function CHF corresponding to the home operator, wherein the fifth charging message comprises the identifier of the first slice, the identifier of the second slice, and a related charging parameter, and is used to perform associated charging for usage of the first slice and/or the second slice.

24. The method according to any one of claims 14 to 23, wherein the identifier of the first slice and the identifier of the second slice are carried in at least one of the following information:
PDU session charging information; or
a network slice identifier, an alternative network slice identifier, a used unit container UUC field, or network slice mapping information in the PDU session charging information.

25. The method according to any one of claims 14 to 24, wherein the first charging message comprises first indication information, indicating that slice replacement or slice recovery occurs for the first data connection session.

26. The method according to any one of claims 14 to 25, wherein the slice identifier comprises single network slice selection assistance information S-NSSAI and/or an identifier of a network slice instance NSI.

27. The method according to any one of claims 14 to 26, wherein the method further comprises:
sending the CDR corresponding to the first data connection session, to determine, based on subscription information of a first slice tenant for the first slice, the charging information of the first slice and the second slice that correspond to the first data connection session, and/or the correspondingly generated CDR, charging corresponding to the first slice tenant.

28. A communication apparatus, comprising a processor, wherein the processor is coupled to a memory, and the memory is configured to store a program or instructions; and when the program or the instructions are executed by the processor, the method according to any one of claims 1 to 27 is performed.

29. A computer-readable storage medium, wherein the computer-readable storage medium stores a computer program or instructions; and when the computer program or the instructions are executed, the method according to any one of claims 1 to 27 is performed.

30. A computer program product, wherein the computer program product comprises computer program code; and when the computer program code is run on a computer, the method according to any one of claims 1 to 27 is performed.
